# EUROPEAN PATENT APPLICATION

(11) **EP 4 030 868 A1**
(43) Date of publication of application: **20.07.2022**
(21) Application number: 19948110.2
(22) Date of filing: 30.09.2019
(51) Int. Cl.: H04W 88/06

(54) **PAGING METHOD AND APPARATUS**

(71) Applicant: HUAWEI TECHNOLOGIES CO., LTD., Shenzhen, Guangdong 518129 (CN)
(72) Inventor: GENG, Tingting, Shenzhen, Guangdong 518129 (CN); LI, Bingzhao, Shenzhen, Guangdong 518129 (CN); YAN, Le, Shenzhen, Guangdong 518129 (CN); ZHANG, Hongping, Shenzhen, Guangdong 518129 (CN)
(74) Representative: Pfenning, Meinig & Partner mbB
(86) International application number: PCT/CN2019/109399
(87) International publication number: WO 2021/062610

(57) **Abstract**

This application provides a paging method and apparatus. The paging method may be applied to a terminal device including a first subscriber identity and a second subscriber identity, where the first subscriber identity corresponds to a first paging occasion, and the second subscriber identity corresponds to a second paging occasion. The method includes: First, the terminal device determines that a paging occasion collision occurs between the first paging occasion and the second paging occasion, and then the terminal device notifies a first access network device that the paging occasion collision occurs, where the first access network device is an access network device corresponding to a first cell in which the terminal device is located by using the first subscriber identity. According to the technical solutions provided in this application, the access network device can learn that the paging occasions corresponding to the plurality of subscriber identities of the terminal device collide.

## Description

### TECHNICAL FIELD

This application relates to the communication field, and more specifically, to a paging method and apparatus.

### BACKGROUND

With development of communication technologies, a growing quantity of terminal devices support simultaneous insertion of a plurality of subscriber identity module (subscriber identity module, SIM) cards. Different SIM cards may camp on different cells or a same cell using different standards, or may camp on different cells or a same cell using a same standard, and network registration is separately performed for the SIM cards. After the registration of the plurality of SIM cards is completed, networks with which the SIM cards are separately registered allocate terminal device identifiers (user equipment identifier, UE ID) to the SIM cards, and determine a paging occasion (paging occasion, PO) of each SIM card based on a paging configuration parameter corresponding to the SIM card and the UE ID corresponding to the SIM card.

For a terminal device with a plurality of SIM cards, POs respectively corresponding to the plurality of SIM cards may completely or partially overlap, and paging corresponding to the plurality of SIM cards is affected and the paging cannot be responded to in a timely manner.

### SUMMARY

This application provides a paging method and apparatus. When a plurality of paging occasions respectively corresponding to a plurality of subscriber identities collide, a terminal device notifies a first access network device that the paging occasion collision occurs, so that the first access network device learns that the paging occasion collision occurs.

According to a first aspect, a paging method is provided. The paging method may be performed by a terminal device, or may be performed by a chip or a circuit disposed in the terminal device. This is not limited in this application. For ease of description, an example in which the method is performed by the terminal device may be used for description.

The paging method includes: determining that a first paging occasion corresponding to a first subscriber identity collides with a second paging occasion corresponding to a second subscriber identity; and sending, to a first access network device, first indication information indicating that the first paging occasion collides with the second paging occasion, where the first access network device is an access network device corresponding to a first cell in which the terminal device is located by using the first subscriber identity.

According to the paging method provided in embodiments of this application, after determining that the paging occasion collision occurs between the first paging occasion corresponding to the first subscriber identity and the second paging occasion corresponding to the second subscriber identity, the terminal device may notify, by using the first indication information, the first access network device that the paging occasion collision occurs, so that the first access network device learns that the paging occasion collision occurs, to avoid a paging response failure caused by the paging occasion collision.

With reference to the first aspect, in some implementations of the first aspect, the first subscriber identity is in an inactive state.

According to the paging method provided in embodiments of this application, the paging occasion corresponding to the first subscriber identity in the inactive state is updated, so that an update procedure can be simplified.

With reference to the first aspect, in some implementations of the first aspect, that the first paging occasion collides with the second paging occasion includes: the first paging occasion and the second paging occasion completely or partially overlap.

According to the paging method provided in embodiments of this application, whether the first paging occasion collides with the second paging occasion may be determined depending on whether the first paging occasion overlaps the second paging occasion in time domain. This provides a feasible solution for determining whether the paging occasion collision occurs.

With reference to the first aspect, in some implementations of the first aspect, the method further includes: receiving, from the first access network device, a first parameter used to determine a third paging occasion corresponding to the first subscriber identity, where the third paging occasion does not collide with the second paging occasion.

According to the paging method provided in embodiments of this application, when the paging occasion collision occurs, the terminal device may update, by using the received first parameter for calculating the third paging occasion, the first paging occasion in the paging occasion collision, where the third paging occasion and the second paging occasion do not overlap, so that the paging occasion collision is avoided.

With reference to the first aspect, in some implementations of the first aspect, the first parameter includes at least one of the following parameters: a paging frame offset, a paging occasion offset, a subscriber identifier, or a discontinuous reception configuration.

According to the paging method provided in embodiments of this application, a part of the parameter may be updated in a process of updating the parameter for calculating the paging occasion, so that a flexible solution is provided.

According to a second aspect, a paging method is provided. The paging method may be performed by a second access network device, or may be performed by a chip or a circuit disposed in the second access network device. This is not limited in this application. For ease of description, an example in which the method is performed by the second access network device may be used for description.

The paging method includes: receiving, by the second access network device, second indication information that is from a first access network device and that indicates that a first paging occasion corresponding to a first subscriber identity collides with a second paging occasion corresponding to a second subscriber identity, where the first access network device is an access network device corresponding to a first cell in which a terminal device is located by using the first subscriber identity, and the terminal device supports the first subscriber identity and the second subscriber identity; and sending, by the second access network device to the first access network device, a first parameter used to determine a third paging occasion corresponding to the first subscriber identity.

According to the paging method provided in embodiments of this application, when learning that the paging occasion collision occurs, the second access network device that stores a context of the terminal device may generate the first parameter, and send the first parameter to the first access network device, so that the first access network device sends the first parameter to the terminal device to recalculate the paging occasion, to avoid the paging occasion collision.

With reference to the second aspect, in some implementations of the second aspect, the second indication information includes at least one of the following information: first indication information, paging configuration information of the first cell, or a second parameter.

According to the paging method provided in embodiments of this application, there may be a plurality of possible specific forms of the second indication information received by the second access network device, so that a flexible and optional solution is provided.

With reference to the second aspect, in some implementations of the second aspect, that the first paging occasion collides with the second paging occasion includes: the first paging occasion and the second paging occasion completely or partially overlap.

According to the paging method provided in embodiments of this application, whether the first paging occasion collides with the second paging occasion may be determined depending on whether the first paging occasion overlaps the second paging occasion in time domain. This provides a feasible solution for determining whether the paging occasion collision occurs.

With reference to the second aspect, in some implementations of the second aspect, the first parameter includes at least one of the following parameters: a paging frame offset, a paging occasion offset, a subscriber identifier, or a discontinuous reception configuration.

According to the paging method provided in embodiments of this application, a part of the parameter may be updated in a process of updating the parameter for calculating the paging occasion, so that a flexible solution is provided.

With reference to the second aspect, in some implementations of the second aspect, the method further includes: generating, by the second access network device, a first response message, where the first response message includes the first parameter; and the sending a first parameter to the first access network device includes: sending the first parameter and the first response message to the first access network device; or sending the first response message to the first access network device.

According to the paging method provided in embodiments of this application, the second access network device can generate the first response message to be sent to the terminal device, and send the first response message to the first access network device, so that the first access network device can send the first response message including the first parameter to the terminal device. This avoids the paging occasion collision.

With reference to the second aspect, in some implementations of the second aspect, the method further includes: storing, by the second access network device, the first parameter.

According to the paging method provided in embodiments of this application, the second access network device can store the generated first parameter, so that when subsequently sending a paging message, the second access network device can include the first parameter in the paging message.

With reference to the second aspect, in some implementations of the second aspect, the method further includes: sending, by the second access network device, a first notification message to a core network device, where the first notification message includes the first parameter and information about a cell to which the first parameter is applicable.

According to the paging method provided in embodiments of this application, the second access network device can send the first parameter to the core network device, so that the core network device learns of the first parameter.

With reference to the second aspect, in some implementations of the second aspect, the method further includes: sending, by the second access network device, a first paging message to the first access network device, where the first paging message includes the first parameter and the information about the cell to which the first parameter is applicable.

According to the paging method provided in embodiments of this application, the second access network device can send the paging message to the first access network device, and include the first parameter in the paging message, so that the first access network device learns of the first parameter.

According to a third aspect, a paging method is provided. The paging method may be performed by a first access network device, or may be performed by a chip or a circuit disposed in the first access network device. This is not limited in this application. For ease of description, an example in which the method is performed by the first access network device may be used for description.

The paging method includes: receiving, by the first access network device, first indication information that is from a terminal device and that indicates that a first paging occasion corresponding to a first subscriber identity collides with a second paging occasion corresponding to a second subscriber identity, where the first access network device is an access network device corresponding to a first cell in which the terminal device is located by using the first subscriber identity, and the terminal device supports the first subscriber identity and the second subscriber identity; and sending, by the first access network device to the terminal device, a first parameter used to determine a third paging occasion corresponding to the first subscriber identity.

According to the paging method provided in embodiments of this application, after receiving, from the terminal device, the first indication information indicating that the paging occasion collision occurs, the first access network device can send, to the terminal device, the parameter for recalculating the paging occasion, so that the calculated third paging occasion does not collide with the second paging occasion. Therefore, the paging occasion collision is avoided.

With reference to the third aspect, in some implementations of the third aspect, that the first paging occasion collides with the second paging occasion includes: the first paging occasion and the second paging occasion completely or partially overlap.

According to the paging method provided in embodiments of this application, whether the first paging occasion collides with the second paging occasion may be determined depending on whether the first paging occasion overlaps the second paging occasion in time domain. This provides a feasible solution for determining whether the paging occasion collision occurs.

With reference to the third aspect, in some implementations of the third aspect, before the sending, by the first access network device, a first parameter to the terminal device, the method further includes: sending, by the first access network device to a second access network device, second indication information indicating that the first paging occasion collides with the second paging occasion; and receiving, by the first access network device, the first parameter from the second access network device.

According to the paging method provided in embodiments of this application, when learning that the paging occasion collision occurs, the second access network device that stores a context of the terminal device may generate the first parameter, and send the first parameter to the first access network device, so that the first access network device sends the first parameter to the terminal device to recalculate the paging occasion, to avoid the paging occasion collision.

With reference to the third aspect, in some implementations of the third aspect, the receiving, by the first access network device, the first parameter from the second access network device includes: receiving, by the first access network device, the first parameter and a first response message from the second access network device, where the first response message includes the first parameter; or receiving, by the first access network device, the first response message from the second access network device.

According to the paging method provided in embodiments of this application, the second access network device can generate the first response message to be sent to the terminal device, and send the first response message to the first access network device, so that the first access network device can send the first response message including the first parameter to the terminal device. This avoids the paging occasion collision.

With reference to the third aspect, in some implementations of the third aspect, the second indication information includes at least one of the following information: the first indication information, paging configuration information of the first cell, or a second parameter.

According to the paging method provided in embodiments of this application, there may be a plurality of possible specific forms of the second indication information received by the second access network device, so that a flexible and optional solution is provided.

With reference to the third aspect, in some implementations of the third aspect, the first parameter includes at least one of the following parameters: a paging frame offset, a paging occasion offset, a subscriber identifier, or a discontinuous reception configuration.

According to the paging method provided in embodiments of this application, a part of the parameter may be updated in a process of updating the parameter for calculating the paging occasion, so that a flexible solution is provided.

With reference to the third aspect, in some implementations of the third aspect, the method further includes: storing, by the first access network device, the first parameter.

According to the paging method provided in embodiments of this application, the first access network device can store the generated first parameter, so that when subsequently sending a paging message, the second access network device does not need to include the first parameter in the paging message.

With reference to the third aspect, in some implementations of the third aspect, the method further includes: sending, by the first access network device, a second notification message to a core network device, where the second notification message includes the first parameter and information about a cell to which the first parameter is applicable.

According to the paging method provided in embodiments of this application, the first access network device can send the first parameter to the core network device, so that the core network device learns of the first parameter.

With reference to the third aspect, in some implementations of the third aspect, the method further includes: receiving, by the first access network device, a first paging message from the second access network device, where the first paging message includes the first parameter and the information about the cell to which the first parameter is applicable; or receiving, by the first access network device, a second paging message from the core network device, where the second paging message includes the first parameter and the information about the cell to which the first parameter is applicable.

According to the paging method provided in embodiments of this application, the second access network device or the core network device can send the paging message to the first access network device, and include the first parameter in the paging message, so that the first access network device learns of the first parameter.

According to a fourth aspect, a paging method is provided. The paging method may be performed by a core network device, or may be performed by a chip or a circuit disposed in the core network device. This is not limited in this application. For ease of description, an example in which the method is performed by the core network device may be used for description.

The paging method includes: receiving, by the core network device, a notification message from an access network device, where the notification message includes a first parameter and information about a cell to which the first parameter is applicable, the first parameter is used to determine a third paging occasion corresponding to a first subscriber identity of a terminal device, the terminal device supports the first subscriber identity and a second subscriber identity, and a first paging occasion corresponding to the first subscriber identity collides with a second paging occasion corresponding to the second subscriber identity; and sending, by the core network device, a second paging message to an access network device to which the cell belongs, where the second paging message includes the first parameter and the information about the cell.

According to the paging method provided in embodiments of this application, the core network device can obtain the first parameter from the access network device, and when initiating paging, the core network device includes, in the paging message, the first parameter and the information about the cell to which the first parameter is applicable, so that the paging occasion collision can be avoided.

According to a fifth aspect, a paging method is provided. The paging method may be performed by a second access network device, or may be performed by a chip or a circuit disposed in the second access network device. This is not limited in this application. For ease of description, an example in which the method is performed by the second access network device may be used for description.

The paging method includes: receiving, by the second access network device, a second request message from a first access network device, where the second request message includes a first parameter used to determine a third paging occasion corresponding to a first subscriber identity, where the first access network device is an access network device corresponding to a first cell in which the terminal device is located by using the first subscriber identity, and the terminal device supports the first subscriber identity and a second subscriber identity; and sending, by the second access network device, a second response message to the first access network device, where the second response message is used to indicate that the first parameter is received.

According to the paging method provided in embodiments of this application, the second access network device may receive the first parameter from the first access network device, learn that a paging occasion collision occurs, and obtain the first parameter for calculating the third paging occasion, so that the paging occasion collision can be avoided.

With reference to the fifth aspect, in some implementations of the fifth aspect, the second request message further includes second indication information indicating that a first paging occasion corresponding to the first subscriber identity collides with a second paging occasion corresponding to the second subscriber identity, and the second indication information includes at least one of the following information: first indication information, paging configuration information of the first cell, or a second parameter.

According to the paging method provided in embodiments of this application, there may be a plurality of possible specific forms of the second indication information received by the second access network device, so that a flexible and optional solution is provided.

With reference to the fifth aspect, in some implementations of the fifth aspect, that the first paging occasion collides with the second paging occasion includes: the first paging occasion and the second paging occasion completely or partially overlap.

According to the paging method provided in embodiments of this application, whether the first paging occasion collides with the second paging occasion may be determined depending on whether the first paging occasion overlaps the second paging occasion in time domain. This provides a feasible solution for determining whether the paging occasion collision occurs.

With reference to the fifth aspect, in some implementations of the fifth aspect, the first parameter includes at least one of the following parameters: a paging frame offset, a paging occasion offset, a subscriber identifier, or a discontinuous reception configuration.

According to the paging method provided in embodiments of this application, a part of the parameter may be updated in a process of updating the parameter for calculating the paging occasion, so that a flexible solution is provided.

With reference to the fifth aspect, in some implementations of the fifth aspect, the method further includes: generating, by the second access network device, a first response message, where the first response message includes the first parameter.

According to the paging method provided in embodiments of this application, the second access network device can generate the first response message to be sent to the terminal device, and send the first response message to the first access network device, so that the first access network device can send the first response message including the first parameter to the terminal device. This avoids the paging occasion collision.

With reference to the fifth aspect, in some implementations of the fifth aspect, the method further includes: storing, by the second access network device, the first parameter.

According to the paging method provided in embodiments of this application, the second access network device can store the generated first parameter, so that when subsequently sending a paging message, the second access network device can include the first parameter in the paging message.

With reference to the fifth aspect, in some implementations of the fifth aspect, the method further includes: sending, by the second access network device, a first notification message to a core network device, where the first notification message includes the first parameter and information about a cell to which the first parameter is applicable.

According to the paging method provided in embodiments of this application, the second access network device can send the first parameter to the core network device, so that the core network device learns of the first parameter.

With reference to the fifth aspect, in some implementations of the fifth aspect, the method further includes: sending, by the second access network device, a first paging message to the first access network device, where the first paging message includes the first parameter and the information about the cell to which the first parameter is applicable.

According to the paging method provided in embodiments of this application, the second access network device can send the paging message to the first access network device, and include the first parameter in the paging message, so that the first access network device learns of the first parameter.

According to a sixth aspect, a paging method is provided. The paging method may be performed by a first access network device, or may be performed by a chip or a circuit disposed in the first access network device. This is not limited in this application. For ease of description, an example in which the method is performed by the first access network device may be used for description.

The paging method includes: receiving, by the first access network device, first indication information that is from a terminal device and that indicates that a first paging occasion corresponding to a first subscriber identity collides with a second paging occasion corresponding to a second subscriber identity, where the first access network device is an access network device corresponding to a first cell in which the terminal device is located by using the first subscriber identity, and the terminal device supports the first subscriber identity and the second subscriber identity; and generating, by the first access network device, a first parameter used to determine a third paging occasion corresponding to the first subscriber identity.

According to the paging method provided in embodiments of this application, after receiving, from the terminal device, the first indication information indicating that the paging occasion collision occurs, the first access network device can send, to the terminal device, the parameter for recalculating the paging occasion, so that the calculated third paging occasion does not collide with the second paging occasion. Therefore, the paging occasion collision is avoided.

With reference to the sixth aspect, in some implementations of the sixth aspect, that the first paging occasion collides with the second paging occasion includes: the first paging occasion and the second paging occasion completely or partially overlap.

According to the paging method provided in embodiments of this application, whether the first paging occasion collides with the second paging occasion may be determined depending on whether the first paging occasion overlaps the second paging occasion in time domain. This provides a feasible solution for determining whether the paging occasion collision occurs.

With reference to the sixth aspect, in some implementations of the sixth aspect, the method further includes: sending, by the first access network device, the first parameter to the terminal device; and sending, by the first access network device, the first parameter to a second access network device.

According to the paging method provided in embodiments of this application, the first access network device may generate the first parameter, and send the first parameter to the second access network device and the terminal device.

With reference to the sixth aspect, in some implementations of the sixth aspect, the method further includes: sending, by the first access network device to the second access network device, second indication information indicating that the first paging occasion corresponding to the first subscriber identity collides with the second paging occasion corresponding to the second subscriber identity, where the second indication information includes at least one of the following information: the first indication information, paging configuration information of the first cell, or a second parameter.

According to the paging method provided in embodiments of this application, there may be a plurality of possible specific forms of the second indication information received by the second access network device, so that a flexible and optional solution is provided.

With reference to the sixth aspect, in some implementations of the sixth aspect, the first parameter includes at least one of the following parameters: a paging frame offset, a paging occasion offset, a subscriber identifier, or a discontinuous reception configuration.

According to the paging method provided in embodiments of this application, a part of the parameter may be updated in a process of updating the parameter for calculating the paging occasion, so that a flexible solution is provided.

With reference to the sixth aspect, in some implementations of the sixth aspect, the method further includes: storing, by the first access network device, the first parameter.

According to the paging method provided in embodiments of this application, the first access network device can store the generated first parameter, so that when subsequently sending a paging message, the second access network device does not need to include the first parameter in the paging message.

With reference to the sixth aspect, in some implementations of the sixth aspect, the method further includes: sending, by the first access network device, a second notification message to a core network device, where the second notification message includes the first parameter and information about a cell to which the first parameter is applicable.

According to the paging method provided in embodiments of this application, the first access network device can send the first parameter to the core network device, so that the core network device learns of the first parameter.

With reference to the sixth aspect, in some implementations of the sixth aspect, the method further includes: receiving, by the first access network device, a first paging message from the second access network device, where the first paging message includes the first parameter and the information about the cell to which the first parameter is applicable; or receiving, by the first access network device, a second paging message from the core network device, where the second paging message includes the first parameter and the information about the cell to which the first parameter is applicable.

According to the paging method provided in embodiments of this application, the second access network device or the core network device can send the paging message to the first access network device, and include the first parameter in the paging message, so that the first access network device learns of the first parameter.

According to a seventh aspect, a paging method is provided. The paging method may be performed by a terminal device, or may be performed by a chip or a circuit disposed in the terminal device. This is not limited in this application. For ease of description, an example in which the method is performed by the terminal device may be used for description.

The paging method includes: determining that a first paging occasion corresponding to a first subscriber identity collides with a second paging occasion corresponding to a second subscriber identity; and generating a first parameter used to determine a third paging occasion corresponding to the first subscriber identity.

According to the paging method provided in embodiments of this application, after determining that the paging occasion collision occurs between the first paging occasion corresponding to the first subscriber identity and the second paging occasion corresponding to the second subscriber identity, the terminal device may generate the first parameter used to determine the third paging occasion corresponding to the first subscriber identity, so that the paging occasion collision is avoided.

With reference to the seventh aspect, in some implementations of the seventh aspect, the first subscriber identity is in an inactive state.

According to the paging method provided in embodiments of this application, the paging occasion corresponding to the first subscriber identity in the inactive state is updated, so that an update procedure can be simplified.

With reference to the seventh aspect, in some implementations of the seventh aspect, that the first paging occasion collides with the second paging occasion includes: the first paging occasion and the second paging occasion completely or partially overlap.

According to the paging method provided in embodiments of this application, whether the first paging occasion collides with the second paging occasion may be determined depending on whether the first paging occasion overlaps the second paging occasion in time domain. This provides a feasible solution for determining whether the paging occasion collision occurs.

With reference to the seventh aspect, in some implementations of the seventh aspect, the method further includes: sending the first parameter to a first access network device.

According to the paging method provided in embodiments of this application, when the paging occasion collision occurs, the terminal device may send the first parameter to the first access network device, so that the first access network device learns of the first parameter.

With reference to the seventh aspect, in some implementations of the seventh aspect, the first parameter includes at least one of the following parameters: a paging frame offset, a paging occasion offset, a subscriber identifier, or a discontinuous reception configuration.

According to the paging method provided in embodiments of this application, a part of the parameter may be updated in a process of updating the parameter for calculating the paging occasion, so that a flexible solution is provided.

According to an eighth aspect, a paging method is provided. The paging method may be performed by a second access network device, or may be performed by a chip or a circuit disposed in the second access network device. This is not limited in this application. For ease of description, an example in which the method is performed by the second access network device may be used for description.

The paging method includes: receiving, by the second access network device, a second request message from a first access network device, where the second request message includes second indication information indicating that a first paging occasion corresponding to a first subscriber identity collides with a second paging occasion corresponding to a second subscriber identity, and/or a first parameter used to determine a third paging occasion corresponding to the first subscriber identity, where the first access network device is an access network device corresponding to a first cell in which a terminal device is located by using the first subscriber identity, and the terminal device supports the first subscriber identity and the second subscriber identity; and sending, by the second access network device, a second response message to the first access network device.

With reference to the eighth aspect, in some implementations of the eighth aspect, the second indication information includes at least one of the following information: first indication information, paging configuration information of the first cell, or a second parameter.

According to the paging method provided in embodiments of this application, there may be a plurality of possible specific forms of the second indication information received by the second access network device, so that a flexible and optional solution is provided.

With reference to the eighth aspect, in some implementations of the eighth aspect, that the first paging occasion collides with the second paging occasion includes: the first paging occasion and the second paging occasion completely or partially overlap.

According to the paging method provided in embodiments of this application, whether the first paging occasion collides with the second paging occasion may be determined depending on whether the first paging occasion overlaps the second paging occasion in time domain. This provides a feasible solution for determining whether the paging occasion collision occurs.

With reference to the eighth aspect, in some implementations of the eighth aspect, the first parameter includes at least one of the following parameters: a paging frame offset, a paging occasion offset, a subscriber identifier, or a discontinuous reception configuration.

According to the paging method provided in embodiments of this application, a part of the parameter may be updated in a process of updating the parameter for calculating the paging occasion, so that a flexible solution is provided.

With reference to the eighth aspect, in some implementations of the eighth aspect, the method further includes: generating, by the second access network device, a first response message, where the first response message includes the first parameter or second acknowledgment information, and the second acknowledgment information is used to acknowledge that the first parameter is received.

According to the paging method provided in embodiments of this application, the second access network device can generate the first response message to be sent to the terminal device, and send the first response message to the first access network device, so that the first access network device can send the first response message including the first parameter to the terminal device. This avoids the paging occasion collision.

With reference to the eighth aspect, in some implementations of the eighth aspect, the method further includes: storing, by the second access network device, the first parameter.

According to the paging method provided in embodiments of this application, the second access network device can store the generated first parameter, so that when subsequently sending a paging message, the second access network device can include the first parameter in the paging message.

With reference to the eighth aspect, in some implementations of the eighth aspect, the method further includes: sending, by the second access network device, a first notification message to a core network device, where the first notification message includes the first parameter and information about a cell to which the first parameter is applicable.

According to the paging method provided in embodiments of this application, the second access network device can send the first parameter to the core network device, so that the core network device learns of the first parameter.

With reference to the eighth aspect, in some implementations of the eighth aspect, the method further includes: sending, by the second access network device, a first paging message to the first access network device, where the first paging message includes the first parameter and the information about the cell to which the first parameter is applicable.

According to the paging method provided in embodiments of this application, the second access network device can send the paging message to the first access network device, and include the first parameter in the paging message, so that the first access network device learns of the first parameter.

According to a ninth aspect, a paging method is provided. The paging method may be performed by a first access network device, or may be performed by a chip or a circuit disposed in the first access network device. This is not limited in this application. For ease of description, an example in which the method is performed by the first access network device may be used for description.

The paging method includes: receiving, by the first access network device, a first parameter that is from a terminal device and that is used to determine a third paging occasion corresponding to a first subscriber identity, where the first access network device is an access network device corresponding to a first cell in which the terminal device is located by using the first subscriber identity, and the terminal device supports the first subscriber identity and a second subscriber identity; and sending, by the first access network device, first acknowledgment information to the terminal device.

According to the paging method provided in embodiments of this application, the first access network device receives, from the terminal device, the first parameter used to determine the third paging occasion corresponding to the first subscriber identity, and notifies the terminal device that the access network device side successfully receives the first parameter.

With reference to the ninth aspect, in some implementations of the ninth aspect, the method further includes: sending, by the first access network device to a second access network device, second indication information indicating that a first paging occasion corresponding to the first subscriber identity collides with a second paging occasion corresponding to the second subscriber identity, where the second indication information includes at least one of the following information: first indication information, paging configuration information of the first cell, or a second parameter.

According to the paging method provided in embodiments of this application, there may be a plurality of possible specific forms of the second indication information received by the second access network device, so that a flexible and optional solution is provided.

With reference to the ninth aspect, in some implementations of the ninth aspect, the first parameter includes at least one of the following parameters: a paging frame offset, a paging occasion offset, a subscriber identifier, or a discontinuous reception configuration.

According to the paging method provided in embodiments of this application, a part of the parameter may be updated in a process of updating the parameter for calculating the paging occasion, so that a flexible solution is provided.

With reference to the ninth aspect, in some implementations of the ninth aspect, the method further includes: storing, by the first access network device, the first parameter.

According to the paging method provided in embodiments of this application, the first access network device can store the generated first parameter, so that when subsequently sending a paging message, the second access network device does not need to include the first parameter in the paging message.

With reference to the ninth aspect, in some implementations of the ninth aspect, the method further includes: sending, by the first access network device, a second notification message to a core network device, where the second notification message includes the first parameter and information about a cell to which the first parameter is applicable.

According to the paging method provided in embodiments of this application, the first access network device can send the first parameter to the core network device, so that the core network device learns of the first parameter.

With reference to the ninth aspect, in some implementations of the ninth aspect, the method further includes: receiving, by the first access network device, a first paging message from the second access network device, where the first paging message includes the first parameter and the information about the cell to which the first parameter is applicable; or receiving, by the first access network device, a second paging message from the core network device, where the second paging message includes the first parameter and the information about the cell to which the first parameter is applicable.

According to the paging method provided in embodiments of this application, the second access network device or the core network device can send the paging message to the first access network device, and include the first parameter in the paging message, so that the first access network device learns of the first parameter.

According to a tenth aspect, a paging apparatus is provided. The paging apparatus includes a processor, configured to implement functions of the terminal device in the methods described in the first aspect and the seventh aspect.

Optionally, the paging apparatus may further include a memory, the memory is coupled to the processor, and the processor is configured to implement the function of the terminal device in the method described in the first aspect. In a possible implementation, the memory is configured to store program instructions and data. The memory is coupled to the processor, and the processor may invoke and execute the program instructions stored in the memory, to implement the functions of the terminal device in the methods described in the first aspect and the seventh aspect.

Optionally, the paging apparatus may further include a communication interface, and the communication interface is used by the paging apparatus to communicate with another device. When the paging apparatus is a terminal device, the communication interface may be a transceiver, an input/output interface, a circuit, or the like.

In a possible design, the paging apparatus includes a processor and a communication interface.

The processor is configured to run a computer program, to enable the paging apparatus to implement either of the methods described in the first aspect and the seventh aspect.

The processor communicates with the outside through the communication interface.

It may be understood that the outside may be an object other than the processor, or an object other than the apparatus.

In another possible design, the paging apparatus is a chip or a chip system. The communication interface may be an input/output interface, an interface circuit, an output circuit, an input circuit, a pin, a related circuit, or the like in the chip or the chip system. The processor may alternatively be embodied as a processing circuit or a logic circuit.

According to an eleventh aspect, a paging apparatus is provided. The paging apparatus includes a processor, configured to implement functions of the second access network device in the methods described in the second aspect, the fifth aspect, and the eighth aspect.

Optionally, the paging apparatus may further include a memory, the memory is coupled to the processor, and the processor is configured to implement the function of the second access network device in the method described in the second aspect. In a possible implementation, the memory is configured to store program instructions and data. The memory is coupled to the processor, and the processor may invoke and execute the program instructions stored in the memory, to implement the functions of the second access network device in the methods described in the second aspect, the fifth aspect, and the eighth aspect.

Optionally, the paging apparatus may further include a communication interface, and the communication interface is used by the paging apparatus to communicate with another device. When the paging apparatus is a network device, the communication interface may be a transceiver, an input/output interface, a circuit, or the like.

In a possible design, the paging apparatus includes a processor and a communication interface.

The processor communicates with the outside through the communication interface.

The processor is configured to run a computer program, to enable the paging apparatus to implement any one of the methods described in the second aspect, the fifth aspect, and the eighth aspect.

It may be understood that the outside may be an object other than the processor, or an object other than the apparatus.

In another possible design, the paging apparatus is a chip or a chip system. The communication interface may be an input/output interface, an interface circuit, an output circuit, an input circuit, a pin, a related circuit, or the like in the chip or the chip system. The processor may alternatively be embodied as a processing circuit or a logic circuit.

According to a twelfth aspect, a paging apparatus is provided. The paging apparatus includes a processor, configured to implement functions of the first access network device in the methods described in the third aspect, the sixth aspect, and the ninth aspect.

Optionally, the paging apparatus may further include a memory, the memory is coupled to the processor, and the processor is configured to implement the function of the first access network device in the method described in the third aspect. In a possible implementation, the memory is configured to store program instructions and data. The memory is coupled to the processor, and the processor may invoke and execute the program instructions stored in the memory, to implement the functions of the first access network device in the methods described in the third aspect, the sixth aspect, and the ninth aspect.

Optionally, the paging apparatus may further include a communication interface, and the communication interface is used by the paging apparatus to communicate with another device. When the paging apparatus is a terminal device, the communication interface may be a transceiver, an input/output interface, a circuit, or the like.

In a possible design, the paging apparatus includes a processor and a communication interface.

The processor is configured to run a computer program, to enable the paging apparatus to implement any one of the methods described in the third aspect, the sixth aspect, and the ninth aspect.

The processor communicates with the outside through the communication interface.

It may be understood that the outside may be an object other than the processor, or an object other than the apparatus.

In another possible design, the paging apparatus is a chip or a chip system. The communication interface may be an input/output interface, an interface circuit, an output circuit, an input circuit, a pin, a related circuit, or the like in the chip or the chip system. The processor may alternatively be embodied as a processing circuit or a logic circuit.

According to a thirteenth aspect, a paging apparatus is provided. The paging apparatus includes a processor, configured to implement a function of the core network device in the method described in the fourth aspect.

Optionally, the paging apparatus may further include a memory, the memory is coupled to the processor, and the processor is configured to implement the function of the core network device in the method described in the fourth aspect. In a possible implementation, the memory is configured to store program instructions and data. The memory is coupled to the processor, and the processor may invoke and execute the program instructions stored in the memory, to implement the function of the core network device in the method described in the fourth aspect.

Optionally, the paging apparatus may further include a communication interface, and the communication interface is used by the paging apparatus to communicate with another device. When the paging apparatus is a network device, the communication interface may be a transceiver, an input/output interface, a circuit, or the like.

In a possible design, the paging apparatus includes a processor and a communication interface.

The processor communicates with the outside through the communication interface.

The processor is configured to run a computer program, to enable the paging apparatus to implement the method described in the fourth aspect.

It may be understood that the outside may be an object other than the processor, or an object other than the apparatus.

In another possible design, the paging apparatus is a chip or a chip system. The communication interface may be an input/output interface, an interface circuit, an output circuit, an input circuit, a pin, a related circuit, or the like in the chip or the chip system. The processor may alternatively be embodied as a processing circuit or a logic circuit.

According to a fourteenth aspect, this application provides a computer-readable storage medium, and the computer-readable storage medium stores instructions. When the instructions are run on a computer, the computer is enabled to perform the methods in the foregoing aspects.

According to a fifteenth aspect, this application provides a computer program product including instructions. When the computer program product runs on a computer, the computer is enabled to perform the methods in the foregoing aspects.

According to a sixteenth aspect, a communication system is provided. The system includes the paging apparatus shown in the tenth aspect, the paging apparatus shown in the eleventh aspect, the paging apparatus shown in the twelfth aspect, and the paging apparatus shown in the thirteenth aspect.

According to a seventeenth aspect, a communication system is provided. The system includes the paging apparatus shown in the eleventh aspect, the paging apparatus shown in the twelfth aspect, and the paging apparatus shown in the thirteenth aspect.

### BRIEF DESCRIPTION OF DRAWINGS

FIG. 1 shows a network architecture applicable to an embodiment of this application;
FIG. 2 is a schematic diagram of a paging procedure according to an embodiment of this application;
FIG. 3 is a schematic diagram of transition of three RRC states of a terminal device according to an embodiment of this application;
FIG. 4A and FIG. 4B are a schematic flowchart of a paging method according to an embodiment of this application;
FIG. 5(a) and FIG. 5(b) each are a schematic block diagram in which a PO collision occurs according to an embodiment of this application;
FIG. 6 is a schematic block diagram in which no PO collision occurs according to an embodiment of this application;
FIG. 7A and FIG. 7B are a schematic flowchart of another paging method according to an embodiment of this application;
FIG. 8 is a schematic flowchart of still another paging method according to an embodiment of this application;
FIG. 9 is a schematic diagram of a paging apparatus 900 according to this application;
FIG. 10 is a schematic diagram of a structure of a terminal device 1000 applicable to an embodiment of this application;
FIG. 11 is a schematic diagram of a paging apparatus 1100 according to this application;
FIG. 12 is a schematic diagram of a paging apparatus 1300 according to this application;
FIG. 13 is a schematic diagram of a structure of an access network device 1400 applicable to an embodiment of this application;
FIG. 14 is a schematic diagram of a paging apparatus 1500 according to this application; and
FIG. 15 is a schematic diagram of a structure of a core network device 1600 applicable to an embodiment of this application.

### DESCRIPTION OF EMBODIMENTS

The following describes technical solutions in this application with reference to the accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, a non-terrestrial network (non-terrestrial network, NTN), or a future network. The 5G mobile communication system described in this application includes a non-standalone (non-standalone, NSA) 5G mobile communication system or a standalone (standalone, SA) 5G mobile communication system. The technical solutions provided in this application may be further applicable to a future communication system, for example, a 6th generation mobile communication system. Alternatively, the communication system may be a public land mobile network (public land mobile network, PLMN), a device-to-device (device-to-device, D2D) communication system, a machine to machine (machine to machine, M2M) communication system, an internet of things (internet of Things, IoT) communication system, or another communication system.

A terminal device (terminal equipment) in embodiments of this application may be an access terminal, a subscriber unit, a subscriber station, a mobile station, a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), a terminal device in a future internet of vehicles, or the like. This is not limited in embodiments of this application.

By way of example, and not limitation, in embodiments of this application, the wearable device may also be referred to as a wearable intelligent device, and is a generic term for wearable devices such as glasses, gloves, watches, clothes, and shoes that are developed based on intelligent design of daily wearing by using wearable technologies. The wearable device is a portable device that is directly worn or integrated into clothes or an accessory of a user. The wearable device not only is a hardware device, but also is used to implement a powerful function through software support, data exchange, and cloud interaction. Generalized wearable intelligent devices include full-featured and large-size devices that can implement all or some functions without depending on smartphones, for example, smart watches or smart glasses, and devices that focus on only one type of application function and need to work with other devices such as smartphones, for example, various smart bands or smart jewelry for monitoring physical signs.

In addition, the terminal device in embodiments of this application may alternatively be a terminal device in an IoT system. IoT is an important part of future development of information technologies. A main technical feature of the IoT is connecting a thing to a network by using a communication technology, to implement an intelligent network for interconnection between a person and a machine or between things. In embodiments of this application, an IoT technology may implement massive connections, deep coverage, and terminal power saving by using, for example, a narrowband (narrowband, NB) technology.

In addition, in embodiments of this application, the terminal device may further include a sensor, for example, an intelligent printer, a train detector, or a gas station. Main functions of the terminal device include collecting data (for some terminal devices), receiving control information and downlink data from a network device, sending an electromagnetic wave, and transmitting uplink data to the network device.

An access network device in embodiments of this application may be any communication device that has wireless sending and receiving functions and that is configured to communicate with a terminal device. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband Unit, BBU), an access point (access point, AP) in a wireless fidelity (Wireless Fidelity, Wi-Fi) system, a wireless relay node, a wireless backhaul node, a transmission point (transmission point, TP), a transmission reception point (transmission reception point, TRP), or the like. Alternatively, the device may be a gNB, a transmission point (TRP or TP), or an integrated access and backhaul (integrated access and backhaul, IAB) in a 5G system, for example, an NR system, one antenna panel or a group of antenna panels (including a plurality of antenna panels) of a base station in a 5G system, or a network node, such as a baseband unit (BBU) or a distributed unit (distributed unit, DU), that constitutes a gNB or a transmission point.

In some deployments, the access network device in embodiments of this application may be a centralized unit (centralized unit, CU) or a distributed unit (distributed unit, DU), or the access network device includes a CU and a DU. The gNB may further include an active antenna unit (active antenna unit, AAU). The CU implements some functions of the gNB, and the DU implements some functions of the gNB. For example, the CU is responsible for processing a non-real-time protocol and a service, to implement functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that a network device may be a device including one or more of a CU node, a DU node, and an AAU node. In addition, the CU may be classified as a network device in a radio access network (radio access network, RAN), or may be classified as a network device in a core network (core network, CN). This is not limited in this application.

Further, the CU may be divided into a control plane central unit (CU-CP) and a user plane central unit (CU-UP). The CU-CP and the CU-UP may also be deployed on different physical devices. The CU-CP is responsible for a control plane function, and mainly includes the RRC layer and a PDCP-C layer. The PDCP-C layer is mainly responsible for data encryption and decryption, integrity protection, data transmission, and the like on a control plane. The CU-UP is responsible for a user plane function, and mainly includes an SDAP layer and a PDCP-U layer. The SDAP layer is mainly responsible for processing data of a core network and mapping a flow (flow) to a bearer. The PDCP-U layer is mainly responsible for at least one function of encryption and decryption, integrity protection, header compression, serial number maintenance, data transmission, and the like on a data plane. Specifically, the CU-CP and the CU-UP are connected through a communication interface (for example, an El interface). The CU-CP represents an access network device and is connected to a core network device through a communication interface (for example, an Ng interface), and is connected to the DU through a communication interface (for example, an F1-C (control plane) interface). The CU-UP is connected to the DU through a communication interface (for example, an Fl-U (user plane) interface).

In another possible implementation, the PDCP-C layer is also included in the CU-UP.

It may be understood that the foregoing protocol layer division for the CU and the DU, and the foregoing protocol layer division for the CU-CP and the CU-UP are merely examples, and there may be another division manner. This is not limited in embodiments of this application.

The access network device mentioned in embodiments of this application may be a device including a CU, a DU, a device including a CU and a DU, or a device including a control plane CU node (a CU-CP node), a user plane CU node (a CU-UP node), and a DU node.

The access network device and the terminal device may be deployed on land, including being deployed indoor or outdoor, or being handheld or vehicle-mounted; may be deployed on water; or may be deployed on an airplane, a balloon, and a satellite in the air. Application scenarios of the radio access network device and the terminal device are not limited in embodiments of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing by using a process (process), for example, a Linux operating system, a Unix operating system, an Android operating system, an iOS operating system, or a Windows operating system. The application layer includes applications such as a browser, an address book, word processing software, and instant communication software. In addition, a specific structure of an execution body of a method provided in embodiments of this application is not specifically limited in embodiments of this application, provided that a program that records code of the method provided in embodiments of this application can be run to perform communication according to the method provided in embodiments of this application. For example, the method provided in embodiments of this application may be performed by a terminal device or a network device, or a functional module that is in the terminal device or the network device and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, a computer-readable medium may include but is not limited to a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable storage media" may include but is not limited to a radio channel, and various other media that can store, include, and/or carry instructions and/or data.

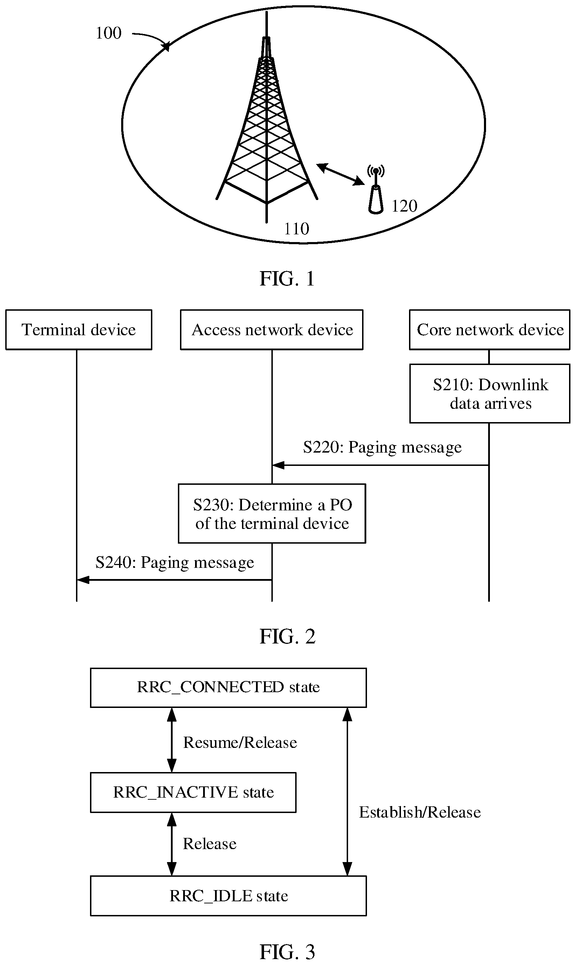

For ease of understanding of embodiments of this application, first, a communication system applicable to embodiments of this application is described in detail by using a communication system shown in FIG. 1 as an example. FIG. 1 is a schematic diagram of a communication system 100 in which a paging method is used according to an embodiment of this application. As shown in FIG. 1, the communication system 100 may include at least one network device, for example, a network device 110 shown in FIG. 1. The communication system 100 may further include at least one terminal device, for example, a terminal device 120 shown in FIG. 1. The network device 110 and the terminal device 120 may communicate with each other through a radio link. A plurality of antennas may be configured for each communication device, for example, the network device 110 or the terminal device 120. For each communication device in the communication system 100, the plurality of configured antennas may include at least one transmit antenna configured to send a signal and at least one receive antenna configured to receive a signal. Therefore, the communication devices in the communication system 100, for example, the network device 110 and the terminal device 120, may communicate with each other by using a multiple-antenna technology.

It should be understood that FIG. 1 is merely a simplified schematic diagram used as an example for ease of understanding. The communication system 100 may further include another network device or another terminal device that is not shown in FIG. 1.

Specifically, the terminal device in embodiments of this application supports simultaneous insertion of a plurality of SIM cards. For example, two SIM cards are supported. One SIM card is used for private services and the other SIM card is used for work. Alternatively, one SIM card is used for data services and the other SIM card is used for voice services. The two SIM cards may belong to a same mobile operator or different mobile operators, or may belong to a same standard (for example, NR, LTE, WCDMA, TDMA2000, or GSM) or belong to different standards. Based on different sending and receiving capabilities of the terminal device, dual-SIM terminal devices may be classified into the following three types:

1. A terminal device in a passive (passive) mode: Although two SIM cards can be inserted into the terminal device, only one SIM card can be used at the same time.

2. A terminal device in a dual-SIM dual-standby (dual-SIM dual-standby, DSDS) mode: Two SIM cards in the terminal device share one set of receivers, and the terminal device in an idle (idle) state monitors paging messages respectively corresponding to the two SIM cards. For example, the terminal device in the idle state or an inactive (inactive) state may monitor, in a time division multiplexing (time division multiplexing, TDM) manner, paging messages respectively corresponding to the two SIM cards.

3. A terminal device in a dual-SIM dual-active (dual-SIM dual-active, DSDA) mode: Two SIM cards in the terminal device have respective transceivers. The two SIM cards may be in a connected state simultaneously, to be specific, the terminal device may simultaneously send and receive data of the two SIM cards.

For ease of understanding embodiments of this application, several basic concepts in embodiments of this application are briefly described. It should be understood that the basic concepts described in the following descriptions are briefly described by using a basic concept specified in the NR protocol as an example, but no limitation is imposed on that embodiments of this application can be applied only to an NR system. Therefore, a standard name that appears when the NR system is used as an example for description is a functional description, and a specific name is not limited. The standard name only indicates a function of the device, and may be correspondingly extended to another system, for example, 2G, 3G, 4G, or a future communication system.

### 1. Paging mechanism

When a terminal device has no data to be transmitted, to save power, the terminal device enters a radio resource control idle (radio resource control IDLE, RRC_IDLE) state or a radio resource control inactive (radio resource control INACTIVE, RRC_INACTIVE) state (which may also be referred to as an INACTIVE state for short). The terminal device in the RRC_IDLE or RRC_INACTIVE state wakes up at a specific position based on a specific cycle (namely, a paging cycle of the terminal device), and monitors whether the terminal device is paged by a network. The position is referred to as a PO of the terminal device. The terminal device sleeps to save power at another position. When downlink data arrives (that is, the network needs to send data to the terminal device):

(1) For the terminal device in the RRC_IDLE state, a core network device sends a core network paging (CN paging) message to an access network device. The CN paging message includes a UE ID. In embodiments of this application, the UE ID may be referred to as an identifier of the terminal device, a subscriber identifier, a terminal device identifier, or the like. Optionally, the UE ID may be an S-temporary mobile subscriber identity (S-temporary mobile subscriber identity, S-TMSI) allocated by the core network device to the terminal device, an international mobile subscriber identity (international mobile subscriber identity, IMSI), an identifier determined based on the S-TMSI, an identifier determined based on the IMSI, or another identifier that can identify the terminal device. The UE ID may be used to calculate a position of a PO of the terminal device in a paging frame (paging frame, PF). Further, the access network device sends a paging (paging) message to the terminal device, where the paging message includes the UE ID, to indicate the terminal device that is being paged.

Optionally, the CN paging message may further include a paging discontinuous reception (discontinuous reception, DRX) cycle allocated by the core network device to the terminal device. For ease of description, the DRX cycle is referred to as T1 in this application. It should be understood that system information of a cell includes a cell-level paging DRX cycle, which is referred to as T2 in this application for ease of description. For the terminal device in the idle state, a paging DRX cycle used to calculate the PO is a smaller value between T1 and T2, and the smaller value is denoted as T.

(2) For the terminal device in the RRC_INACTIVE state, an access network device sends a radio access network (radio access network, RAN) paging message to another access network device in an RNA, where the RAN paging message includes a RAN UE ID. Optionally, the RAN UE ID may be an inactive radio network temporary identifier (inactive radio network temporary identifier, I-RNTI), and the I-RNTI may uniquely identify the terminal device in the RNA. An air interface paging message sent by the another access network device to the terminal device includes the I-RNTI, used to indicate the terminal device that is being paged. Optionally, the RAN paging message may further include a UE ID index (index). The UE ID index is generally determined based on a UE ID, for example, S-TMSI mod 1024 or IMSI mod 1024. The UE ID index may be used to calculate a position of the PO of the terminal device in a PF.

Optionally, the RAN paging message may further include a paging DRX cycle T3 allocated by the access network device to the terminal device. For the terminal device in the inactive state, the paging DRX cycle used to calculate the paging occasion is a smallest value of T1, T2, and T3, and the smallest value is denoted as T.

After obtaining T, the access network device can calculate the PO of the terminal device based on the UE ID, T, and a paging configuration parameter of a cell. The paging configuration parameter of the cell may be obtained from system information of the cell. Optionally, the paging configuration parameter of the cell in the system information of the cell includes defaultPagingCycle, nAndPagingFrameOffset, and Ns. defaultPagingCycle is T2. nAndPagingFrameOffset may be used to obtain a paging frame offset (PF_offset) and a quantity N of PFs in one paging cycle, where Ns indicates a quantity of POs in one paging frame.

After the PO of the terminal device is calculated, the access network device sends a paging message through an air interface on the PO of the terminal device, where the paging message includes a paging identifier of the terminal device. It may be understood that the terminal device in the RRC_INACTIVE state may receive a RAN paging message. In this case, a paging identifier of the terminal device in the paging message may be the I-RNTI. The terminal device in the RRC_INACTIVE state may alternatively receive a CN paging message. For example, the access network device or a core network device releases context information of the terminal device and connections between the terminal device and both the access network device and the core network device. From a perspective of a network device, the terminal device is in the RRC_IDLE state. Therefore, the network device sends a CN paging message. In this case, a paging identifier of the terminal device in the paging message may be an S-TMSI, an IMSI, an identifier determined based on the S-TMSI, an identifier determined based on the IMSI, or another identifier that can identify the terminal device. The terminal device monitors, on the PO, a physical channel for receiving a paging message. If the terminal device receives the paging message and determines, based on a paging identifier of the terminal device in the paging message, that the terminal device is being paged, the terminal device initiates a new RRC connection establishment process (for example, if a CN paging message is received) or an RRC connection resume process (for example, if a RAN paging message is received) in a cell on which the terminal device camps, to enter a radio resource control connected (radio resource control CONNECTED, RRC_CONNECTED) state.

To better understand the foregoing paging process, an example in which a terminal device in an RRC_IDLE state is paged by a core network device is used to describe the foregoing paging process with reference to FIG. 2. FIG. 2 is a schematic diagram of a paging procedure according to an embodiment of this application. The paging procedure includes the following steps.

S210: A core network device determines that there is downlink data to be sent to a terminal device.

S220: The core network device sends a core network paging message to an access network device.

The core network paging message includes an S-TMSI allocated by the core network device to the terminal device or an IMSI and a paging DRX cycle.

S230: The access network device determines a PO of the terminal device.

S240: The access network device sends a paging message to the terminal device.

Specifically, the access network device sends the paging message on the PO of the terminal device. Correspondingly, the terminal device receives the paging message on the PO of the terminal device.

### 2. PO calculation

In NR, a PF in which a PO of UE is located is determined by using (SFN+PF_offset) mod T=(T div N)^{∗}(UE_ID mod N), where a system frame number (system frame number, SFN) identifies a frame number of the PF; PF_offset is an offset of the PF; T is a paging cycle of the UE, and the unit is a frame; N identifies a quantity of PFs in one paging cycle (where T div N indicates a quantity of consecutive frames in which one PF appears); the UE ID is S-TMSI mod 1024 or IMSI mod 1024, where values of PF_offset, T, and N all come from system information of a current cell or are related to a paging configuration parameter of the current cell, and PF_offset may be 0.

After the PF is determined, a position of the PO of the UE in the PF may be determined, for example, by using two steps.

Step 1: Obtain a serial number of the PO by using i_s=floor(UE_ID/N) mod Ns, where i_s is the serial number of the PO, Ns is a quantity of POs in one PF, and a value of Ns comes from information about the current cell.

Step 2: Find the position of the PO based on the serial number of the PO. After obtaining the serial number of the PO, find a configuration of the PO of the terminal device based on a configuration of a paging search space of the current cell.

It can be learned from the foregoing procedure of calculating the PO that the parameters for determining the position of the PO of the terminal device include the UE ID and a cell paging configuration parameter applicable to all terminal devices in the current cell. When two SIM cards are inserted into a terminal device, network registration is separately performed for the two SIM cards. After the registration is completed, networks allocate (different or same) UE IDs to the corresponding SIM cards respectively. A position of a PO corresponding to each SIM card is calculated based on a cell paging configuration parameter of a cell on which the SIM card camps and the UE ID of the SIM card.

For UE with two SIM cards, it may be calculated that positions of POs corresponding to the two SIM cards are the same or (partially) overlap (that is, a paging occasion collision problem occurs). For example, a terminal device in the DSDS mode can monitor only paging corresponding to one SIM card at a position of a PO, and if the other SIM card has paging for the terminal device at the position of the PO, the paging corresponding to the other SIM card is not received by terminal device, causing a problem such as call missing.

### 3. RRC state

RRC states of the terminal device in this application include an RRC connected state RRC_CONNECTED state, an RRC inactive state RRC_INACTIVE state, and an RRC idle state RRC_IDLE state. Transition of the three states is shown in FIG. 3. FIG. 3 is a schematic diagram of transition of the three RRC states of the terminal device according to an embodiment of this application. It may be understood that RRC states of the terminal device may alternatively include the RRC_CONNECTED state and the RRC_IDLE state. An RRC state corresponding to the terminal device is not limited in embodiments of this application. When the terminal device is in the RRC_CONNECTED state, links have been established between the terminal device and both an access network device and a core network device. When data arrives at a network, the data may be directly transmitted to the terminal device.

When the terminal device is in the RRC_INACTIVE state, it indicates that the terminal device has previously established links to the access network device and the core network device, but the link between the terminal device and the access network device is released. Although the link is released, the terminal device and the access network device store a context of the terminal device. When there is data to be transmitted, the access network device can quickly resume the link.

In this application, an access network device that configures the terminal device to enter the RRC_INACTIVE state and stores the context of the terminal device is referred to as a source access network device, an anchor (anchor) access network device, or a second access network device. In other words, the source access network device may be understood as an access network device that stores the context of the terminal device, and/or the source access network device may be understood as an access network device that generates a configuration used by the terminal device to enter the RRC_INACTIVE state. (For example, in a scenario in which the anchor access network device determines not to provide the context of the terminal device to a target access network device, although from a perspective of the terminal device, a message for configuring the terminal device to enter the RRC_INACTIVE state is sent by the target access network device, from a perspective of the access network device, the source access network device generates the foregoing message and sends the message to the target access network device, and the target access network device forwards the message to the terminal device.) As the terminal device moves, the anchor access network device may change, and a new anchor access network device appears. For the terminal device in the RRC_INACTIVE state, because the terminal device and the access network device store the context of the terminal device, after the terminal device initiates an RRC resume request (RRC resume request), if a current serving access network device obtains the context of the terminal device, encryption and integrity protection may be performed on a response message sent by the access network device to the terminal device. For example, the access network device sends, to the terminal device, an RRC resume (RRC resume) message or an RRC release (RRC release) message on which encryption and integrity protection are performed. When downlink data arrives, if a network side considers that the terminal device is in a non-RRC_IDLE state (for example, an AMF considers that the terminal device is in the RRC_CONNECTED state or the RRC_INACTIVE state, and the anchor access network device considers that the terminal device is in the RRC_INACTIVE state), the core network device directly sends data to the anchor access network device, and the anchor access network device sends a RAN paging message to another access network device in a radio access network notification area (RAN notification area, RNA). If the network side considers that the terminal device is in the RRC_IDLE state due to various abnormal reasons, the network side sends a CN paging message. When the terminal device is in the RRC_IDLE state, there is no link between the terminal device and neither the access network device nor the core network device. When there is data to be transmitted, links between the terminal device and both the access network device and the core network device are established.

In addition, to facilitate understanding of embodiments of this application, the following descriptions are provided.

First, in this application, "used to indicate" may include "used to directly indicate" and "used to indirectly indicate". When a piece of indication information is described as indicating A, the indication information may directly indicate A or indirectly indicate A, but it does not necessarily indicate that the indication information includes A.

Information indicated by the indication information is referred to as to-be-indicated information. In a specific implementation process, there are a plurality of manners of indicating the to-be-indicated information. For example, but not limited to, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is already learned of or agreed on in advance. For example, specific information may alternatively be indicated by using an arrangement sequence of all information that is agreed on in advance (for example, stipulated in a protocol), to reduce indication overheads to some extent. In addition, a common part of all information may be further identified and indicated in a unified manner, to reduce indication overheads caused by separately indicating same information.

Second, "first", "second", and various numerical numbers (for example, "#1" and "#2") in this application are merely used to distinguish between objects for ease of description, but are not intended to limit the scope of embodiments of this application. For example, different paging occasions are distinguished, and different access network devices are distinguished.

Third, in this application, "preset" may include indicating by using network device signaling, or may be pre-defined, for example, defined in a protocol. "Pre-definition" may be implemented by prestoring corresponding code or a corresponding table in a device (for example, including the terminal device and the network device), or in another manner that may be used to indicate related information. A specific implementation is not limited in this application.

Fourth, "store" in embodiments of this application may be storage in one or more memories. The one or more memories may be separately disposed, or may be integrated into an encoder, a decoder, a processor, or a communication apparatus. Alternatively, a part of the one or more memories may be separately disposed, and a part of the one or more memories are integrated into a decoder, a processor, or a communication apparatus. A type of the memory may be a storage medium in any form. This is not limited in this application.

Fifth, a "protocol" in embodiments of this application may be a standard protocol in the communication field, for example, may include an LTE protocol, an NR protocol, and a related protocol applied to a future communication system. This is not limited in this application.

With reference to FIG. 1, the foregoing briefly describes the scenario in which the paging method provided in embodiments of this application can be applied, and introduces the basic concepts that may be involved in embodiments of this application. The following describes in detail a paging method provided in embodiments of this application with reference to accompanying drawings.

It should be understood that the method provided in embodiments of this application may be used in a system in which communication is performed by using a multiple-antenna technology, for example, the communication system 100 shown in FIG. 1. The communication system may include at least one network device and at least one terminal device. The network device and the terminal device may communicate with each other by using the multi-antenna technology.

It should be further understood that, a specific structure of an execution body of the method provided in embodiments of this application is not specifically limited in embodiments shown below, provided that a program that records code of the method provided in embodiments of this application can be run to perform communication according to the method provided in embodiments of this application. For example, the method provided in embodiments of this application may be performed by a terminal device or a network device, or a functional module that is in the terminal device or the network device and that can invoke and execute the program.

Without loss of generality, interaction between the network device and the terminal device is used as an example below to describe in detail the paging method provided in embodiments of this application.

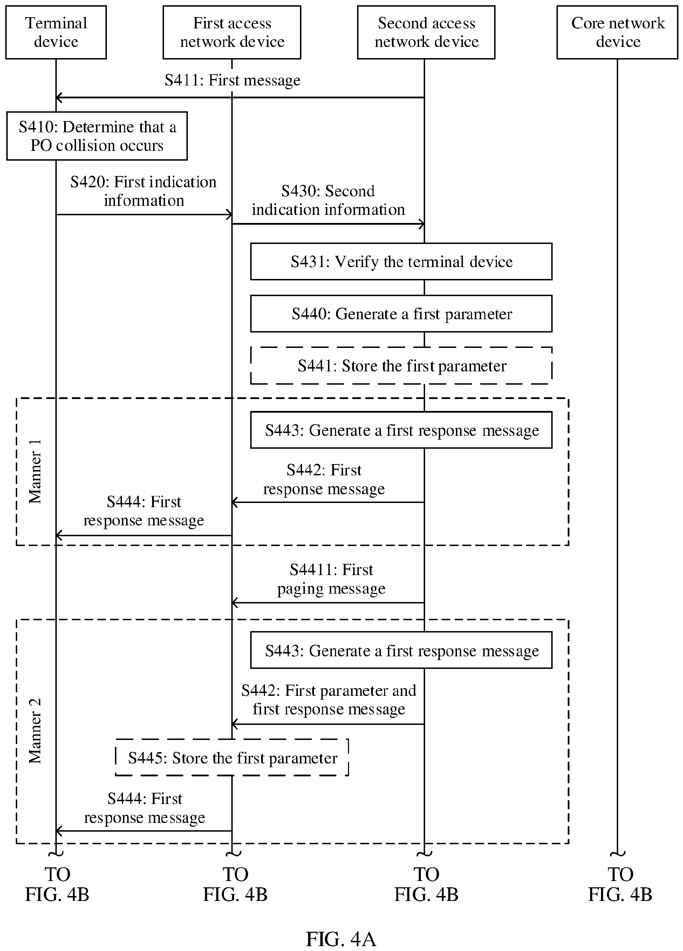

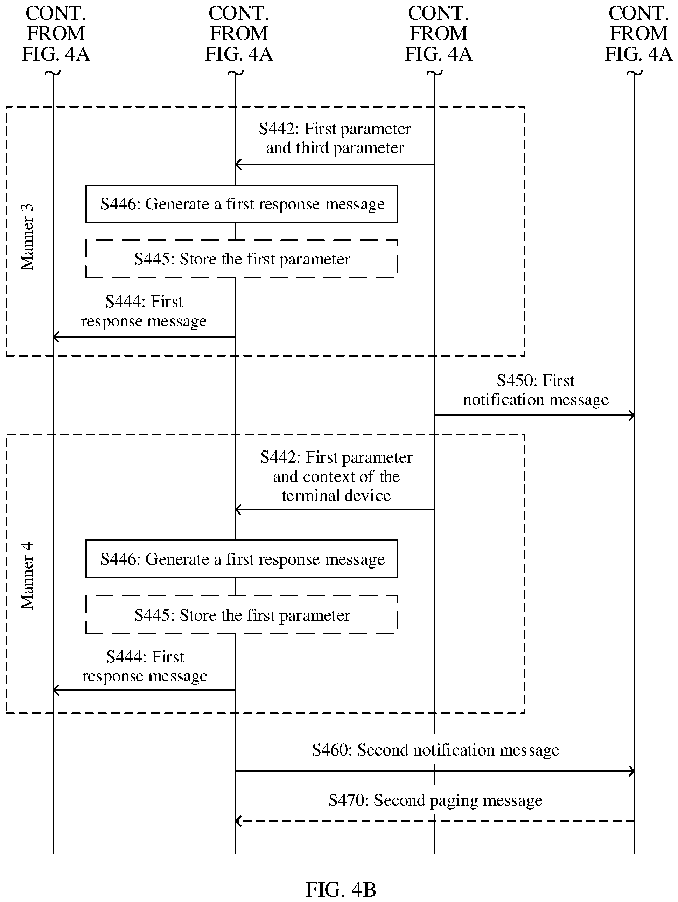

FIG. 4A and FIG. 4B are a schematic flowchart of a paging method according to an embodiment of this application. In the flowchart, execution bodies include a second access network device, a first access network device, a terminal device, and a core network device.

Specifically, the terminal device shown in FIG. 4A and FIG. 4B supports a plurality of subscriber identities. For ease of description, the following embodiments are described by using an example in which the terminal device supports two subscriber identities. For example, the terminal device supports a first subscriber identity and a second subscriber identity. It should be understood that a quantity of subscriber identities specifically supported by the terminal device is not limited in this application. The terminal device may support more than two subscriber identities. It can be learned from the foregoing descriptions that when the terminal device supports the first subscriber identity and the second subscriber identity, a position of a paging occasion corresponding to each subscriber identity may be calculated based on a cell paging configuration parameter of a cell on which the subscriber identity camps and a UE ID of the subscriber identity. For example, the paging occasion calculated based on the cell paging configuration parameter of the cell on which the first subscriber identity camps and the UE ID of the first subscriber identity is a first paging occasion, and the paging occasion calculated based on the cell paging configuration parameter of the cell on which the second subscriber identity camps and the UE ID of the second subscriber identity is a second paging occasion.

The subscriber identity in embodiments of this application may be referred to as a subscriber identity module (subscriber identity module, SIM) card. It should be understood that the subscriber identity referred to as the SIM card constitutes no limitation on the protection scope of this application, and may be referred to as another name. For example, the subscriber identity may also be referred to as a universal subscriber identity module (universal subscriber identity module, USIM) card.

In addition, the paging occasion in this application may be referred to as a PO for short, and a collision between different paging occasions may be referred to as a PO collision. It should be understood that the paging occasion referred to as the PO in this application is merely an example, and may be referred to as another name. For ease of description, the paging occasion is referred to as the PO in the following descriptions.

In FIG. 4A and FIG. 4B, the second access network device is an access network device that stores a context of the terminal device before the PO is updated, the first access network device is an access network device corresponding to a first cell in which the terminal device is located by using the first subscriber identity, and the first cell may also be understood as a serving cell, a current cell, a target cell, or the like.

The paging method includes a part or all of the following steps.

S410: The terminal device determines that a PO collision occurs.

Optionally, in this embodiment of this application, a moment at which the terminal device determines that the PO collision occurs may be after the terminal device learns of a parameter required for calculating a first PO and a parameter required for calculating a second PO, or may be after the terminal device receives a paging message for paging the first subscriber identity or the second subscriber identity, or another moment at which the terminal device can learn of the collision between the first PO and the second PO.

Specifically, that the terminal device determines that the PO collision occurs may be: The terminal device determines that positions occupied by the first PO and the second PO in time domain, or in time domain and in frequency domain are the same or partially overlap. This is briefly referred to as that the PO collision occurs between the first PO and the second PO.

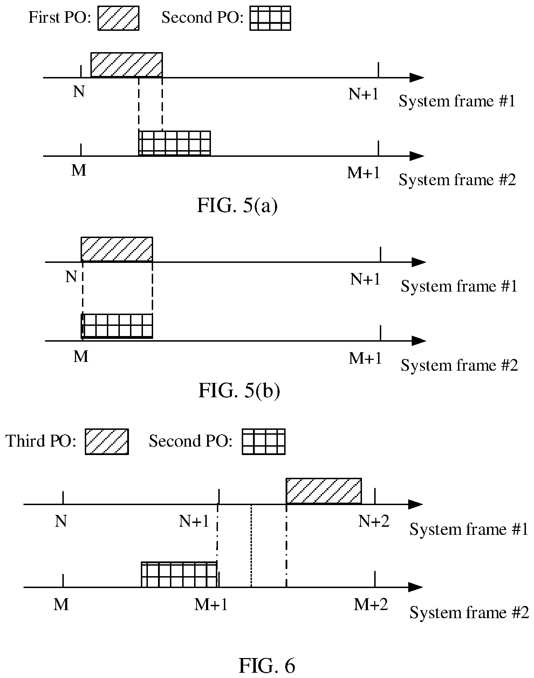

To better understand the PO collision, how to determine whether a PO collision occurs is described with reference to FIG. 5(a) and FIG. 5(b). FIG. 5(a) and FIG. 5(b) each are a schematic block diagram in which a PO collision occurs according to an embodiment of this application. It can be learned from FIG. 5(a) that, a first PO in a system frame #1 and a second PO in a system frame #2 partially overlap. In this case, a PO collision occurs between the first PO and the second PO. It can be learned from FIG. 5(b) that, a first PO in a system frame #1 and a second PO in a system frame #2 all overlap. In this case, it is considered that a PO collision occurs between the first PO and the second PO. It should be understood that the case in which the PO collision occurs in FIG. 5(a) or FIG. 5(b) is merely an example, and constitutes no limitation on the protection scope of this application. For how the terminal device determines that the PO collision occurs, refer to a stipulation in a current protocol or a stipulation in a future protocol. Details are not described in this application.

Further, the terminal device is in an inactive state by using the first subscriber identity. The inactive state in this application may be an RRC_INACTIVE state specified in an NR communication protocol; or may be an enhanced RRC_IDLE state specified in an LTE communication protocol, for example, an RRC_IDLE state in which RRC resume can be performed; or may be a state with a similar function in a future communication system. In this embodiment of this application, a signaling procedure in an NR system is merely used as an example for description, and constitutes no limitation on the protection scope of this application.

In a possible implementation, before the first subscriber identity is in the inactive state, the method procedure shown in FIG. 4A and FIG. 4B further includes S411: The terminal device receives a first message sent by the second access network device. Specifically, the first message may be a radio resource control release (radio resource control release, RRC release) message. The first message includes a suspension configuration, and the suspension configuration includes configuration information for entering the RRC_INACTIVE state by the terminal device. After the terminal device receives the first message, the first subscriber identity enters the RRC_INACTIVE state.

It should be understood that a state of the second subscriber identity supported by the terminal device is not limited in embodiments of this application, and may be the RRC_IDLE state, the RRC_INACTIVE state, or an RRC_CONNECTED state. When the second subscriber identity is in the RRC_IDLE state or the RRC_INACTIVE state, according to the paging method provided in this embodiment of this application, a parameter update speed can be further improved while avoiding the PO collision. The paging method provided in this embodiment of this application is a parameter update procedure initiated by using the first subscriber identity in the INACTIVE state.

In this embodiment, after determining that the PO collision occurs, the terminal device notifies the collision to the first access network device to which a current serving cell (which may also be referred to as a first cell) belongs. In this case, the method procedure shown in FIG. 4A and FIG. 4B further includes S420: The terminal device sends first indication information to the first access network device, where the first indication information is used to indicate that the first paging occasion collides with the second paging occasion.

In a possible implementation, that the terminal device sends, to the first access network device, first indication information indicating that the first paging occasion collides with the second paging occasion may be: The terminal device sends a first request message to the first access network device, where the first request message includes the first indication information. The first request message may be an RRC resume request (RRC resume request) message or another message that carries the first indication information.

In another possible implementation, the first indication information that is sent by the terminal device to the first access network device and that indicates that the first paging occasion collides with the second paging occasion may be newly added signaling between the terminal device and the first access network device.

Optionally, from a perspective of reducing signaling overheads, the first indication information may be sent to the first access network device by using an RRC resume request message. In a possible implementation, triggered by a function of the first indication information (where the first indication information is used to indicate that the first paging occasion collides with the second paging occasion), the first indication information may be referred to as a cause value (cause). In a possible implementation, the cause value may be the PO collision (PO collision).

In this embodiment, after learning that the PO collision occurs, the first access network device may send second indication information to the second access network device, to notify the second access network device that the PO collision occurs between the first subscriber identity and the second subscriber identity in the first cell. In this case, the method procedure shown in FIG. 4A and FIG. 4B further includes S430: The first access network device sends the second indication information to the second access network device, where the second indication information is used to indicate that the first paging occasion collides with the second paging occasion.

In a possible implementation, that the first access network device sends the second indication information to the second access network device may be: The first access network device sends a second request message to the second access network device, where the second request message includes the second indication information. The second request message may be a retrieve terminal device context request (retrieve UE context request) message or another message that carries the second indication information.

In another possible implementation, the second indication information sent by the first access network device to the second access network device may be newly added signaling between the second access network device and the first access network device.

Optionally, the second indication information includes at least one of the following information: first indication information, paging configuration information of the first cell, or a second parameter.

The first indication information is the foregoing first indication information. Details are not described herein again. The paging configuration information of the first cell includes a quantity of paging frames in a default paging cycle and a quantity of paging occasions in one paging frame. Further, the paging configuration information of the first cell may further include at least one of the default paging cycle of the first cell, a radio access network paging cycle of the terminal device, or a paging frame offset of the first cell. The second parameter is a parameter that is generated by the first access network device and that is used to calculate a third paging occasion, and may provide reference for the second access network device to calculate a first parameter.

In this embodiment, after receiving the second indication information, the second access network device verifies the terminal device. To be specific, the method procedure shown in FIG. 4A and FIG. 4B further includes S431: The second access network device verifies the terminal device. In this application, the second access network device is an access network device that stores the context of the terminal device, and may verify the terminal device by using a security context of the terminal device.

After successfully verifying the terminal device, the second access network device determines that the PO collision occurs. In this case, the second access network device may generate the first parameter used to calculate the third PO corresponding to the first subscriber identity. In this case, the method procedure shown in FIG. 4A and FIG. 4B further includes S440: The second access network device generates the first parameter.

The third PO does not overlap the second PO, so that the PO collision can be avoided. FIG. 6 is a schematic block diagram in which no PO collision occurs according to an embodiment of this application. It can be learned from FIG. 6 that a third PO in a system frame #1 and a second PO in a system frame #2 do not overlap. The third PO may be determined based on the first parameter. (It should be understood that the first parameter is completely or partially different from the parameter for determining the first PO.) Specifically, it can be learned from the foregoing PO calculation that the first parameter includes at least one of a paging frame offset, a paging occasion offset, a subscriber identifier, or a discontinuous reception configuration. The subscriber identifier may be S-TMSI mod 1024 or IMSI mod 1024 obtained through updating; a change amount relative to original S-TMSI mod 1024, where the change amount is referred to as S-TMSI mod 1024_offset; a change amount relative to original IMSI mod 1024, where the change amount is referred to as IMSI mod 1024_offset; another identifier that can identify the terminal device; or a change amount relative to another original identifier that can identify the terminal device. In an example, if the identifier may be S-TMSI mod 1024 or IMSI mod 1024 obtained through updating, determining the third PO based on the subscriber identifier may be directly calculating the third PO based on S-TMSI mod 1024 or IMSI mod 1024 obtained through updating. If the subscriber identifier is S-TMSI mod 1024_offset (or IMSI mod 1024_offset), determining the third PO based on the subscriber identifier may be calculating the third PO based on original S-TMSI mod 1024 and S-TMSI mod 1024 (or based on original IMSI mod 1024 and IMSI mod 1024_offset). It should be understood that a parameter specifically included in the first parameter used to calculate the third PO is not limited in embodiments of this application. For details, refer to a parameter required for PO calculation specified in a current protocol or a specification of a parameter required for PO calculation in a future protocol. It should be further understood that the offset in embodiments of this application refers to "offset", and may be translated as an offset or may be translated as a deviation. This is not limited in this application.

In a possible implementation, when the second indication information includes the paging configuration information of the first cell, the second access network device may determine a PF and a PO of the terminal device in the first cell based on the paging configuration information of the first cell. Therefore, the first parameter is generated based on the paging configuration information of the first cell.

In another possible implementation, when the second indication information does not carry the paging configuration information of the first cell, the second access network device may also generate the first parameter. The first parameter may be generated by modifying any parameter in PF and PO calculation formulas. For example, at least one of the paging frame offset, the paging occasion offset, the subscriber identifier, or the discontinuous reception configuration used for PO calculation is modified.

Optionally, in this embodiment, the second access network device may store the first parameter after generating the first parameter. In this case, the method procedure shown in FIG. 4A and FIG. 4B further includes S441: The second access network device stores the first parameter.

Optionally, the second access network device may further store information about a cell corresponding to the first parameter and an identifier of the terminal device. The information about the cell may include a cell global identifier (cell global identifier, CGI) or a cell identifier (cell identifier). The identifier of the terminal device may be at least one of an I-RNTI, an S-TMSI, an IMSI of the terminal device, or another identifier that can identify the terminal device. When the second access network device stores the first parameter, if the second access network device subsequently pages the terminal device that is in the INACTIVE state and that is served by the first access network device, the second access network device may include the first parameter in a RAN paging message when sending the RAN paging message to the first access network device. To be specific, optionally, the method procedure shown in FIG. 4A and FIG. 4B further includes S4411: The second access network device sends a first paging message to the first access network device, where the first paging message includes the first parameter. The first paging message may further include the information about the cell to which the first parameter is applicable. The information about the cell may include a CGI or a cell identifier.

In this embodiment, after generating the first parameter, the second access network device may send the first parameter to the first access network device. In this case, the method procedure shown in FIG. 4A and FIG. 4B further includes S442: The second access network device sends the first parameter to the first access network device.

In a possible implementation, that the second access network device sends the first parameter to the first access network device may be: The second access network device sends a second response message to the first access network device, where the second response message includes the first parameter. The second response message may be a retrieve terminal device context failure (retrieve UE context failure) message or another message that carries the first parameter.

In another possible implementation, the first parameter sent by the second access network device to the first access network device may be newly added signaling between the second access network device and the first access network device, and the newly added signaling is used to transmit the first parameter.

Specifically, content included in the first parameter may be any one of the following several possibilities:
Possibility 1: A parameter included in the first parameter sent by the second access network device to the first access network device is a modified parameter used to calculate the paging occasion, and a parameter that is used to calculate the paging occasion and that is not included in the first parameter may use an original parameter. For example, the third paging occasion is calculated based on the paging frame offset, the paging occasion offset, the subscriber identifier, and the discontinuous reception configuration. When the second access network device determines to change only the discontinuous reception configuration, the first parameter may include only a changed discontinuous reception configuration. After receiving the first parameter, the terminal device can learn that the third paging occasion is calculated based on the original paging frame offset, the paging occasion offset, the subscriber identifier, and the new discontinuous reception configuration.
Possibility 2: The first parameter sent by the second access network device to the first access network device includes all (modified and unmodified) parameters used to calculate the paging occasion. For example, the third paging occasion is calculated based on the paging frame offset, the paging occasion offset, the subscriber identifier, and the discontinuous reception configuration. When the second access network device determines to change only the discontinuous reception configuration, the first parameter may include a changed discontinuous reception configuration, the original paging frame offset, the original paging occasion offset, and the original subscriber identifier. After receiving the first parameter, the terminal device calculates the third paging occasion based on the parameters included in the first parameter.
Possibility 3: A parameter included in the first parameter sent by the second access network device to the first access network device is a change amount of a modified parameter relative to an original parameter. For example, the third paging occasion is calculated based on the paging frame offset, the paging occasion offset, the subscriber identifier, and the discontinuous reception configuration. When the second access network device determines to change only the discontinuous reception configuration, the first parameter may include a change amount of a changed discontinuous reception configuration relative to the original discontinuous reception configuration. After receiving the first parameter, the terminal device learns of the changed discontinuous reception configuration based on the change amount included in the first parameter, and calculates the third paging occasion based on the paging frame offset, the paging occasion offset, and the subscriber identifier that are known.

The foregoing possibility 1 to possibility 3 are merely examples for describing possible content of the first parameter in this embodiment, and constitute no limitation on the protection scope of this application. In this application, the third PO that does not collide with the second PO can be calculated by using the content included in the first parameter and the parameter known to the terminal device or the access network device. For the content of the first parameter, examples are not provided for description herein one by one.

The following uses an example in which the first parameter is sent to the first access network device by using the second response message for description.

Manner 1: That the second response message includes the first parameter may be: The second response message includes a first response message, and the first response message includes the first parameter. In the manner 1, the method procedure shown in FIG. 4A and FIG. 4B further includes S443: The second access network device generates the first response message.

Specifically, after receiving the first response message, the first access network device transparently transmits the first response message to the terminal device. In this case, the method procedure shown in FIG. 4A and FIG. 4B further includes S444: The first access network device sends the first response message to the terminal device. It may be understood that the first access network device sends the first parameter to the terminal device, where the first parameter is used by the terminal device to determine the third PO, so that the PO collision is avoided. That the terminal device receives the first parameter from the first access network device may be: The terminal device receives the first response message from the first access network device, where the first response message includes the first parameter. The first response message may be an RRC release message or another message that carries the first parameter. Alternatively, the first parameter received by the terminal device from the first access network device may be newly added signaling between the terminal device and the first access network device, and the newly added signaling is used to transmit the first parameter. The second response message may be a retrieve UE context failure message or another message that carries the first response message.

Manner 2: That the second response message includes the first parameter may be: The second response message includes the first response message and the first parameter. In the manner 2, S442 is that the second access network device sends the first response message and the first parameter to the first access network device. The method procedure shown in FIG. 4A and FIG. 4B further includes S443: The second access network device generates the first response message.

Specifically, after receiving the first response message, the first access network device transparently transmits the first response message to the terminal device. In this case, the method procedure shown in FIG. 4A and FIG. 4B further includes S444: The first access network device sends the first response message to the terminal device. The second response message may be a retrieve UE context failure message or another message that carries the first response message and the first parameter. The first response message may be an RRC release message or another message that carries the first parameter.

Optionally, in the manner 2, the first access network device receives the first parameter, and may store the first parameter. In this case, the method procedure shown in FIG. 4A and FIG. 4B further includes S445: The first access network device stores the first parameter.

Optionally, the first access network device may further store the information about the cell corresponding to the first parameter and the identifier of the terminal device. The information about the cell may include the CGI or the cell identifier, and the identifier of the terminal device may be at least one of the I-RNTI, the S-TMSI, the IMSI of the terminal device, or the another identifier that can identify the terminal device. When the first access network device stores the first parameter, if the second access network device subsequently pages the terminal device that is in the INACTIVE state and that is served by the first access network device, a procedure in which the second access network device sends the RAN paging message to the first access network device may be the same as an existing procedure without any modification.

It should be understood that the second access network device sends the first parameter and the first response message to the first access network device may be: The second access network device sends the second response message to the first access network device, where that the second response message includes the first parameter and the first response message is merely an example, and constitutes no limitation on the protection scope of this application. For example, that the second access network device sends the first parameter and the first response message to the first access network device may be: The second access network device separately sends the first parameter and the first response message to the first access network device.

It should be further understood that, when the second access network device sends the first parameter and the first response message to the first access network device, the first access network device stores the first parameter. In this case, in S4411, the first paging message sent by the second access network device to the first access network device may not carry the first parameter.

Specifically, when the second access network device does not send the first parameter and the first response message to the first access network device, the second access network device stores the first parameter; or when the second access network device sends the first parameter and the first response message to the first access network device, the second access network device may store or not store the first parameter.

Manner 3: The second response message includes the first parameter and a third parameter required for generating the first response message. In the manner 3, S442 is that the second access network device sends the third parameter and the first parameter to the first access network device. The method procedure shown in FIG. 4A and FIG. 4B further includes S446: The first access network device generates the first response message. The third parameter may be a parameter used to perform security protection on the first response message. Specifically, the third parameter may include at least one of an integrity protection key, an integrity protection algorithm, an encryption key, and an encryption algorithm.

Specifically, after the first access network device generates the first response message, the method procedure shown in FIG. 4A and FIG. 4B further includes S444: The first access network device sends the first response message to the terminal device. In this implementation, the method procedure shown in FIG. 4A and FIG. 4B may further include S445: The first access network device stores the first parameter. The second response message may be a retrieve UE context failure message or another message that carries the third parameter and the first parameter. The first response message may be an RRC release message or another message that carries the first parameter. When the first access network device stores the first parameter, if the second access network device subsequently pages the terminal device that is in the INACTIVE state and that is served by the first access network device, a procedure in which the second access network device sends the RAN paging message to the first access network device may be the same as an existing procedure without any modification.

It should be understood that the second access network device sends the first parameter and the third parameter to the first access network device may be: The second access network device sends the second response message to the first access network device, where that the second response message includes the first parameter and the third parameter is merely an example, and constitutes no limitation on the protection scope of this application. For example, that the second access network device sends the first parameter and the third parameter to the first access network device may be: The second access network device separately sends the first parameter and the third parameter to the first access network device.

In the foregoing manner 1 to manner 3, it may be understood that an anchor base station (where the anchor base station is the second access network device) determines not to provide information about the context of the terminal device to a target base station (where the target base station is the first access network device), and subsequently, the second access network device may send the first parameter to the core network device. To be specific, the method procedure shown in FIG. 4A and FIG. 4B further includes S450: The second access network device sends a first notification message to the core network device, where the first notification message carries the first parameter. Optionally, the first notification message may further carry the information about the cell corresponding to the first parameter. The information about the cell may include the CGI or the cell identifier.

Manner 4: The second response message includes the context of the terminal device and the first parameter. In the manner 4, S442 is that the second access network device sends the context of the terminal device and the first parameter to the first access network device. The method procedure shown in FIG. 4A and FIG. 4B further includes S446: The first access network device generates the first response message, and S444: The first access network device sends the first response message to the terminal device. In this implementation, the method procedure shown in FIG. 4A and FIG. 4B may further include S445: The first access network device stores the first parameter.

Optionally, the first access network device may further store the information about the cell corresponding to the first parameter and the identifier of the terminal device. The information about the cell may include the CGI or the cell identifier (cell identifier), and the identifier of the terminal device may be at least one of the I-RNTI, the S-TMSI, the IMSI of the terminal device, or the another identifier that can identify the terminal device.

It should be understood that the second access network device sends the first parameter and the context of the terminal device to the first access network device may be: The second access network device sends the second response message to the first access network device, where that the second response message includes the first parameter and the context of the terminal device is merely an example, and constitutes no limitation on the protection scope of this application. For example, that the second access network device sends the first parameter and the context of the terminal device to the first access network device may be: The second access network device separately sends the first parameter and the context of the terminal device to the first access network device.

It should be further understood that in the manner 4, it may be understood that the anchor base station provides the information about the context of the terminal device for the target base station, to be specific, the anchor base station changes from the second access network device to the first access network device, and the first access network device successfully obtains the context of the terminal device, and may serve as the anchor base station. Subsequently, the first access network device may send the first parameter to the core network device. To be specific, the method procedure shown in FIG. 4A and FIG. 4B further includes S460: The first access network device sends a second notification message to the core network device, where the second notification message carries the first parameter. Optionally, the second notification message further carries the information about the cell corresponding to the first parameter. The information about the cell may include the CGI or the cell identifier.

Further, when the first access network device fails to obtain the context of the terminal device from the second access network device, the first access network device receives the first paging message from the second access network device, that is, S4411 is performed. The first access network device may further receive the second paging message from the core network device, that is, CN paging occurs. To be specific, the method procedure shown in FIG. 4A and FIG. 4B further includes S470: The first access network device receives the second paging message sent by the core network device, where the second paging message includes the first parameter. Optionally, the second paging message may further include the information about the cell to which the first parameter is applicable.

In a possible implementation, the first notification message sent by the second access network device to the core network device or the second notification message sent by the first access network device to the core network device may further include the information about the cell to which the first parameter is applicable. The information about the cell may include the CGI or the cell identifier.

It should be understood that, when the access network device sends the notification message to the core network device, a problem that when the core network device sends a CN paging message to the terminal device, the core network device side and the terminal device side have inconsistent understandings of the PF and the PO because there is no latest paging parameter can be avoided. Specifically, after receiving the first parameter, the core network device does not necessarily initiate paging. However, when the CN paging occurs, the core network device sends the second paging message to the access network device.

It may be understood that if the first access network device includes a CU and a DU, the CU of the first access network device sends a third paging message to the DU of the first access network device, where the third paging message carries the first parameter. The DU may determine the paging occasion of the terminal device based on the first parameter, and send the paging message to the terminal device on the paging occasion. Optionally, the third paging message may further carry the information about the cell corresponding to the first parameter. The information about the cell may include the CGI or the cell identifier. The DU may determine, based on the information about the cell, the cell to which the first parameter is applicable.

In the method procedure shown in FIG. 4A and FIG. 4B, when the PO collision occurs, the second access network device generates the first parameter, and sends the first parameter to the terminal device, the core network device, or the first access network device by using different procedures, so that the PO collision is avoided and paging performance is improved.

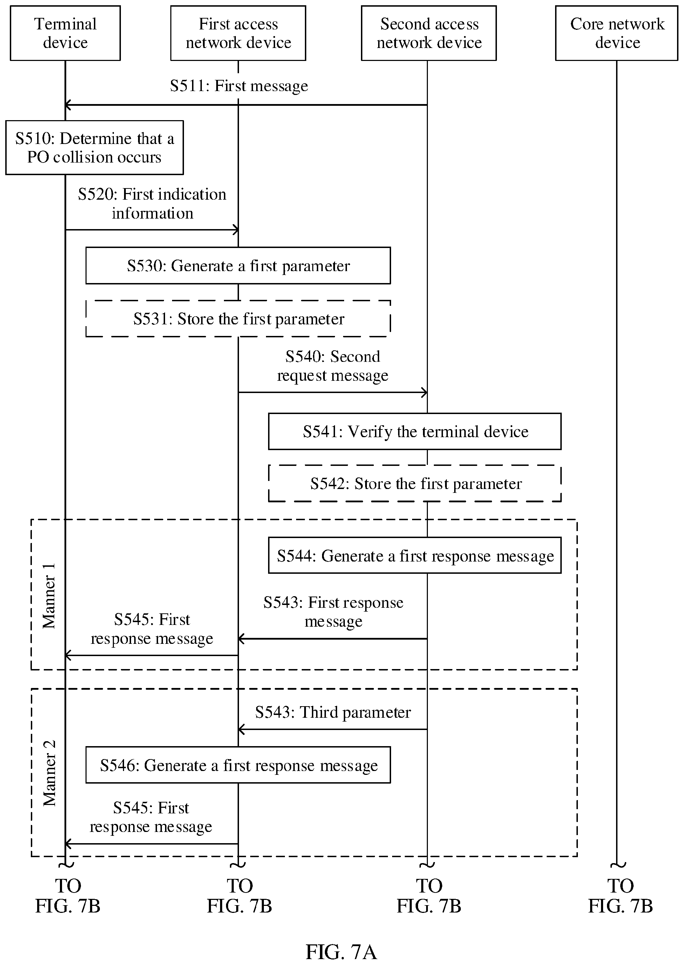

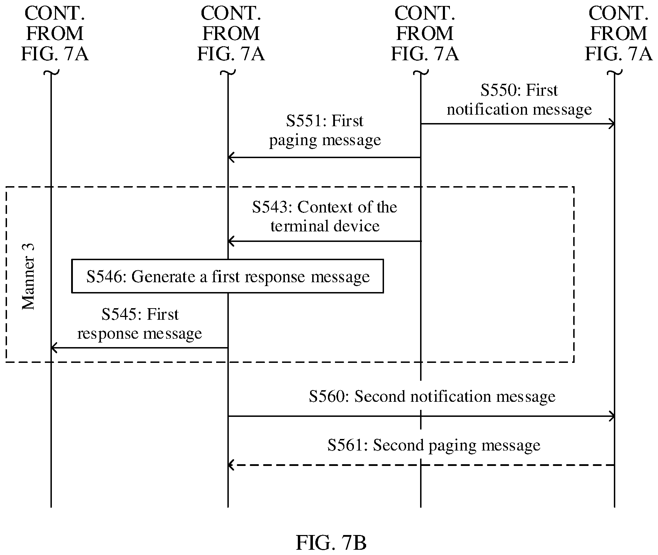

Further, this application further provides another paging method. A first access network device generates the foregoing first parameter, and sends the first parameter to a terminal device, a core network device, or a second access network device by using different procedures, so that a PO collision is avoided and paging performance is improved. The paging method is described in detail below with reference to FIG. 7A and FIG. 7B.

FIG. 7A and FIG. 7B are a schematic flowchart of another paging method according to an embodiment of this application. In the flowchart, execution bodies include a second access network device, a first access network device, a terminal device, and a core network device. For descriptions of the second access network device, the first access network device, and the terminal device, refer to descriptions in FIG. 4A and FIG. 4B. Details are not described herein again.

The paging method includes at least a part of the following steps.

S510: The terminal device determines that a PO collision occurs. This is similar to S410, and details are not described herein again.

S511: The terminal device receives a first message sent by the second access network device. This is similar to S411, and details are not described herein again.

S520: The terminal device sends first indication information to the first access network device. This is similar to S420, and details are not described herein again.

In this embodiment, after the first access network device learns that the PO collision occurs, the first access network device may generate a first parameter used to calculate a third PO corresponding to a first subscriber identity. In this case, the method procedure shown in FIG. 7A and FIG. 7B further includes S530: The first access network device generates the first parameter. The third PO is similar to the third PO shown in FIG. 4A and FIG. 4B. Details are not described herein again. After the first access network device generates the first parameter, the first access network device may store the first parameter. To be specific, the method procedure shown in FIG. 7A and FIG. 7B further includes S531: The first access network device stores the first parameter. The first access network device may further store information about a cell corresponding to the first parameter and an identifier of the terminal device. The information about the cell may include a CGI or a cell identifier, and the identifier of the terminal device may be at least one of an I-RNTI, an S-TMSI, an IMSI of the terminal device, or another identifier that can identify the terminal device. If the second access network device subsequently pages the terminal device that is in an INACTIVE state and that is served by the first access network device, a procedure in which the second access network device sends RAN paging message to the first access network device may be the same as an existing procedure without any modification.

In a possible implementation, the first access network device sends second indication information to the second access network device. To be specific, the method procedure shown in FIG. 7A and FIG. 7B further includes S540: The first access network device sends the second indication information to the second access network device. The second indication information is similar to the second indication information shown in S430. Details are not described herein again.

In another possible implementation, after generating the first parameter, the first access network device may send the first parameter to the second access network device. To be specific, the method procedure shown in FIG. 7A and FIG. 7B further includes S540: The first access network device sends the first parameter to the second access network device.

Specifically, in FIG. 7A and FIG. 7B, an example in which a second request message includes the second indication information and/or the first parameter is used for description. To be specific, the method procedure shown in FIG. 7A and FIG. 7B further includes S540: The first access network device sends the second request message to the second access network device. The second request message may be a retrieve UE context request message.

After receiving the second request message, the second access network device verifies the terminal device. To be specific, the method procedure shown in FIG. 7A and FIG. 7B further includes S541: The second access network device verifies the terminal device. After the second access network device successfully verifies the terminal device, when the second request message carries the first parameter, the method procedure shown in FIG. 7A and FIG. 7B further includes S542: The second access network device stores the first parameter.

Optionally, the second access network device may further store the information about the cell corresponding to the first parameter and the identifier of the terminal device. The information about the cell may include the CGI or the cell identifier, and the identifier of the terminal device may be at least one of the I-RNTI, the S-TMSI, the IMSI of the terminal device, or the another identifier that can identify the terminal device. If the second access network device subsequently pages the terminal device that is in the INACTIVE state and that is served by the first access network device, the second access network device may include the first parameter in the RAN paging message when sending the RAN paging message to the first access network device. Optionally, the RAN paging message may further include the information about the cell corresponding to the first parameter. The information about the cell may include the CGI or the cell identifier.

Further, the method procedure shown in FIG. 7A and FIG. 7B further includes S543: The second access network device sends a second response message to the first access network device, where the second response message is used to notify the first access network device that the second request message has been successfully received.

Manner 1: The second response message is a retrieve UE context failure message, and the retrieve UE context failure message carries a first response message. S543 is that the second access network device sends the first response message to the first access network device, where the first response message is generated by the second access network device. To be specific, the method procedure shown in FIG. 7A and FIG. 7B further includes S544: The second access network device generates the first response message, where the first response message carries the first parameter.

In this implementation, the method procedure shown in FIG. 7A and FIG. 7B further includes S545: The first access network device sends the first response message to the terminal device, where the first response message is used to notify the terminal device of the first parameter.

Manner 2: The second response message is a retrieve UE context failure message, and the retrieve UE context failure message carries a third parameter required for generating the first response message. S543 is that the second access network device sends the third parameter to the first access network device. In this implementation, the method procedure shown in FIG. 7A and FIG. 7B further includes S546: The first access network device generates the first response message. The method procedure shown in FIG. 7A and FIG. 7B further includes S545: The first access network device sends the first response message to the terminal device.

In the foregoing two possible implementations, it may be understood that an anchor base station does not change, to be specific, the anchor base station does not provide a context of the terminal device to a target access network device (where the anchor base station is the second access network device), and subsequently the second access network device sends the first parameter to the core network device. To be specific, the method procedure shown in FIG. 7A and FIG. 7B further includes S550: The second access network device sends a first notification message to the core network device, where the first notification message carries the first parameter. Optionally, the first notification message may further include the information about the cell corresponding to the first parameter. The information about the cell may include the CGI or the cell identifier.

When the anchor base station determines not to provide the context of the terminal device to the target base station, the first access network device receives a first paging message from the second access network device. To be specific, the method procedure shown in FIG. 7 further includes S551: The first access network device receives the first paging message sent by the second access network device, where the first paging message includes the first parameter. Optionally, the first paging message may further include the information about the cell to which the first parameter is applicable.

Manner 3: The second response message is a retrieve UE context response message, and the retrieve UE context response message carries the context of the terminal device. S543 is that the second access network device sends the context of the terminal device to the first access network device. In this implementation, the method procedure shown in FIG. 7A and FIG. 7B further includes S546: The first access network device generates the first response message, and S545: The first access network device sends the first response message to the terminal device.

In this implementation, it may be understood that the anchor base station determines to provide information about the context of the terminal device for the target base station, and the anchor base station changes, to be specific, the anchor base station changes from the second access network device to the first access network device, and the first access network device successfully obtains the context of the terminal device, and may serve as the anchor base station. Subsequently, the first access network device sends the first parameter to the core network device. To be specific, the method procedure shown in FIG. 7A and FIG. 7B further includes S560: The first access network device sends a second notification message to the core network device, where the second notification message carries the first parameter. Optionally, the second notification message may further include the information about the cell corresponding to the first parameter. The information about the cell may include the CGI or the cell identifier.

When the anchor base station changes, the first access network device may receive a second paging message from the core network device. To be specific, the method procedure shown in FIG. 7 further includes S561: The first access network device receives the second paging message sent by the core network device, where the second paging message includes the first parameter, and the second paging message may further include the information about the cell to which the first parameter is applicable.

It may be understood that if the first access network device includes a CU and a DU, the CU of the first access network device sends a third paging message to the DU of the first access network device, where the third paging message carries the first parameter. The DU may determine the paging occasion of the terminal device based on the first parameter, and send the paging message to the terminal device on the paging occasion. Optionally, the third paging message may further carry the information about the cell corresponding to the first parameter. The information about the cell may include the CGI or the cell identifier. The DU may determine, based on the information about the cell, the cell to which the first parameter is applicable.

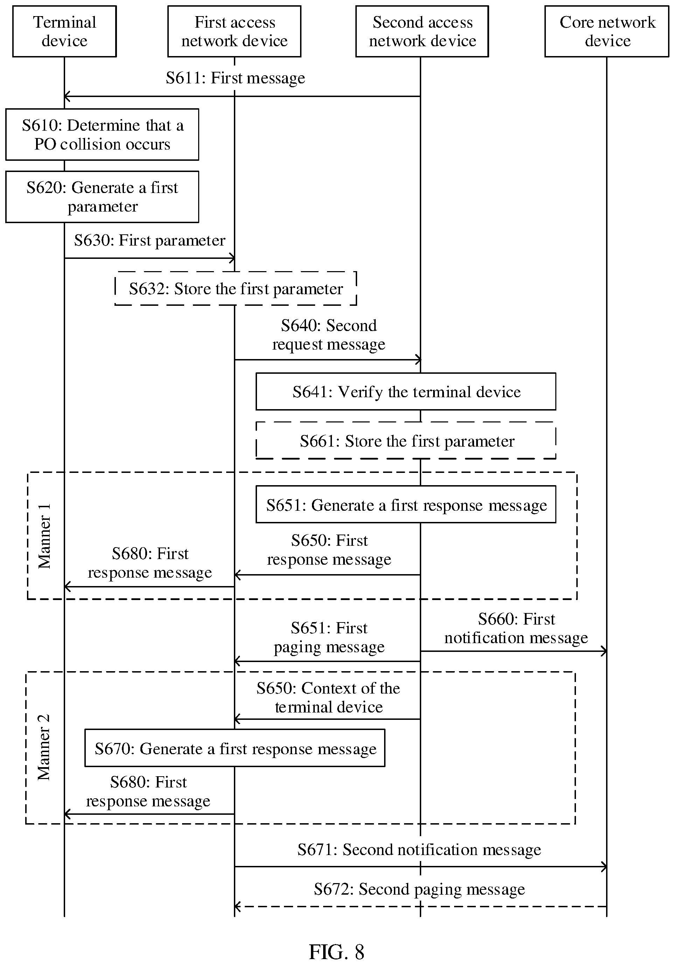

Further, this application further provides another paging method. A terminal device generates the foregoing first parameter, and sends the first parameter to a first access network device, a core network device, or a second access network device by using different procedures, so that a PO collision is avoided and paging performance is improved. The paging method is described in detail below with reference to FIG. 8.

FIG. 8 is a schematic flowchart of still another paging method according to an embodiment of this application. In the flowchart, execution bodies include a second access network device, a first access network device, a terminal device, and a core network device. For descriptions of the second access network device, the first access network device, and the terminal device, refer to descriptions in FIG. 4A and FIG. 4B. Details are not described herein again.

The paging method includes at least a part of the following steps.

S610: The terminal device determines that a PO collision occurs. This is similar to S410, and details are not described herein again.

S611: The terminal device receives a first message sent by the second access network device. This is similar to S411, and details are not described herein again.

In this embodiment, after the terminal device learns that the PO collision occurs, the terminal device may generate a first parameter used to calculate a third PO corresponding to a first subscriber identity. In this case, the method procedure shown in FIG. 8 further includes S620: The terminal device generates the first parameter. The third PO is similar to the third PO shown in FIG. 4A and FIG. 4B. Details are not described herein again.

That the terminal device generates the first parameter may be: The terminal device modifies a parameter for calculating a first PO. For example, the parameter for calculating the first PO is PF_offset#1, T#1, UE ID#1, Ns#1, and the like, and the terminal device changes at least one of PF_offset#1, T#1, UE ID#1, and Ns#1, to obtain the first parameter.

Alternatively, the terminal device randomly determines the parameter used to determine the third PO, that is, obtains a group of parameters again without on the basis of the original parameter for calculating the first PO. It should be understood that, to more accurately avoid the PO collision, the terminal device may obtain the first parameter by modifying the parameter for calculating the first PO.

Further, the terminal device sends the generated first parameter to the first access network device. To be specific, the method procedure shown in FIG. 8 further includes S630: The terminal device sends the first parameter to the first access network device.

Optionally, the first parameter is carried in a first request message, the first request message may be an RRC resume request message or another message that carries the first parameter, and the RRC resume request message is used to request to resume a radio resource control RRC connection.

In a possible implementation, the first request message carries the foregoing first indication information. In another possible implementation, the first request message carries the foregoing first indication information and the first parameter.

Further, after learning that the PO collision occurs, the first access network device notifies the second access network device that the PO collision occurs, and the first access network device sends second indication information to the second access network device. The second indication information is similar to that shown in S430. Details are not described herein again.

Optionally, the first access network device may further send the first parameter to the second access network device. To reduce signaling overheads, the second indication information and the first parameter may be sent to the second access network device by using a second request message. To be specific, the method procedure shown in FIG. 8 further includes S640: The first access network device sends the second request message to the second access network device. The second request message may be a retrieve terminal device context request (retrieve UE context request) message or another message that carries the second indication information.

Further, after receiving the second indication information, the second access network device verifies the terminal device. Because the second access network device stores a context of the terminal device, the second access network device verifies the terminal device based on a security context of the terminal device. If the second access network device successfully verifies the terminal device, it is considered that the first parameter generated by the terminal device is reliable. To be specific, the method procedure shown in FIG. 8 further includes S641: The second access network device verifies the terminal device.

After successfully verifying the terminal device, the second access network device notifies the first access network device that the second request message is successfully received. To be specific, the method procedure shown in FIG. 8 further includes S650: The second access network device sends a second response message to the first access network device.

Manner 1: The second response message is a retrieve terminal device context failure (retrieve UE context failure) message, and the retrieve UE context failure message carries a first response message. S650 is that the second access network device sends the first response message to the first access network device, where the first response message is generated by the second access network device. To be specific, the method procedure shown in FIG. 8 further includes S651: The second access network device generates the first response message. In a possible implementation, the first response message carries the first parameter. In another possible implementation, the first response message carries second acknowledgment information, where the second acknowledgment information is used to indicate that the access network device successfully receives the first parameter. It may be understood that the second acknowledgment information is used to indicate that the access network device is to determine the paging occasion of the terminal device based on the first parameter, or the first parameter and information about a cell to which the first parameter is applicable. In still another possible implementation, the first response message carries the first parameter and/or the second acknowledgment information.

In this case, it may be understood that an anchor base station does not provide the context of the terminal device to a target access network device (where the anchor base station is the second access network device), and subsequently the second access network device may send the first parameter to the core network device. To be specific, the method procedure shown in FIG. 8 further includes S660: The second access network device sends a first notification message to the core network device, where the first notification message carries the first parameter. Optionally, the first notification message may further include the information about the cell corresponding to the first parameter. The information about the cell may include a CGI or a cell identifier.

Further, after the second access network device receives the first parameter, the second access network device may store the first parameter. To be specific, the method procedure shown in FIG. 8 further includes S661: The second access network device stores the first parameter. Optionally, the second access network device may further store the information about the cell corresponding to the first parameter and an identifier of the terminal device. The information about the cell may include the CGI or the cell identifier, and the identifier of the terminal device may be at least one of an I-RNTI, an S-TMSI, an IMSI of the terminal device, or another identifier that can identify the terminal device. If the second access network device subsequently pages the terminal device that is in an INACTIVE state and that is served by the first access network device, the second access network device may include the first parameter in a RAN paging message when sending the RAN paging message to the first access network device. Optionally, the RAN paging message may further include the information about the cell corresponding to the first parameter.

Manner 2: The second response message is a retrieve terminal device context obtaining response (retrieve UE context response) message, and the retrieve UE context response message carries the context of the terminal device; or the second response message is a retrieve UE context failure message, and the retrieve UE context failure message carries a third parameter required for generating the first response message. In this case, S650 is that the second access network device sends the context of the terminal device or the third parameter to the first access network device.

In this case, after receiving the second response message, the first access network device may generate the first response message based on the context of the terminal device or the third parameter required for generating the first response message. To be specific, the method procedure shown in FIG. 8 further includes S670: The first access network device generates the first response message. In a possible implementation, the first response message carries the first parameter. In another possible implementation, the first response message carries first acknowledgment information, where the first acknowledgment information is used to indicate that the access network device successfully receives the first parameter. In still another possible implementation, the first response message carries the first parameter and/or the first acknowledgment information.

In this implementation, it may be understood that the anchor base station determines to provide the context of the terminal device for the target base station, to be specific, the anchor base station changes from the second access network device to the first access network device, and the first access network device successfully obtains the context of the terminal device, and may serve as the anchor base station. Subsequently, the first access network device may send the first parameter to the core network device. To be specific, the method procedure shown in FIG. 8 further includes S671: The first access network device sends a second notification message to the core network device, where the second notification message carries the first parameter. Optionally, the second notification message may further include the information about the cell corresponding to the first parameter. The information about the cell may include the CGI or the cell identifier.

Further, after the first access network device receives the first parameter, the first access network device may store the first parameter. To be specific, the method procedure shown in FIG. 8 further includes S632: The first access network device stores the first parameter. Optionally, the first access network device may further store the information about the cell corresponding to the first parameter and the identifier of the terminal device. The information about the cell may include the CGI or the cell identifier, and the identifier of the terminal device may be at least one of the I-RNTI, the S-TMSI, the IMSI of the terminal device, or the another identifier that can identify the terminal device. If the second access network device subsequently pages the terminal device that is in the INACTIVE state and that is served by the first access network device, a procedure in which the second access network device sends the RAN paging message to the first access network device may be the same as an existing procedure without any modification.

In a possible implementation, the first notification message sent by the second access network device to the core network device or the second notification message sent by the first access network device to the core network device may further include the information about the cell to which the first parameter is applicable.

It should be understood that, when the access network device sends the notification message to the core network device, a problem that when the core network device sends a CN paging message to the terminal device in the INACTIVE state, the core network device side and the terminal device side have inconsistent understandings of a PF and the PO because there is no latest paging parameter can be avoided.

It may be understood that if the first access network device includes a CU and a DU, the CU of the first access network device sends a third paging message to the DU of the first access network device, where the third paging message carries the first parameter. The DU may determine the paging occasion of the terminal device based on the first parameter, and send the paging message to the terminal device on the paging occasion. Optionally, the third paging message may further carry the information about the cell corresponding to the first parameter. The information about the cell may include the CGI or the cell identifier. The DU may determine, based on the information about the cell, the cell to which the first parameter is applicable.

Further, after receiving the second response message, the first access network device sends the first response message to the terminal device, where the first response message is used to indicate that the first parameter sent by the terminal device has been successfully received. To be specific, the method procedure shown in FIG. 8 further includes S680: The first access network device sends the first response message to the terminal device, where the first response message is used to notify the terminal device that the sent first parameter has been successfully received by the access network device.

In a possible implementation, the first response message carries the first parameter.

In another possible implementation, the first response message carries the first acknowledgment information, and the first acknowledgment information is used to indicate that the access network device successfully receives the first parameter.

In still another possible implementation, the first response message carries the first parameter and/or the first acknowledgment information.

Optionally, the first response message is an RRC release message.

In a possible implementation, in the method procedures shown in FIG. 4A and FIG. 4B, FIG. 7A and FIG. 7B, and FIG. 8, the terminal device may obtain the first parameter. For example, after S444 in FIG. 4A and FIG. 4B is performed, the terminal device receives the first parameter from the first access network device. For another example, after S545 in FIG. 7A and FIG. 7B is performed, the terminal device receives the first parameter from the first access network device. For another example, after S620 in FIG. 8 is performed, the terminal device generates the first parameter.

Further, after obtaining the first parameter, the terminal device may store the first parameter and the information about the cell corresponding to the first parameter. The information about the cell may include the CGI or the cell identifier. The terminal device further stores the identifier of the terminal device, and the identifier of the terminal device may be at least one of the I-RNTI, the S-TMSI, the IMSI of the terminal device, or the another identifier that can identify the terminal device.

It should be understood that, in this embodiment of this application, the terminal device may calculate the third paging occasion only in a first cell based on the first parameter. When the terminal device camps on another cell, if a paging occasion determined based on the original parameter is not in a collision, the terminal device may continue to determine the paging occasion by using the original parameter.

For example, two subscriber identities of the terminal device separately camp on a cell 1 and a cell 2. The terminal device determines that a PO #A in the cell 1 collides with a PO #B in the cell 2, the terminal device obtains the first parameter, and determines a new PO #A' of the terminal device in the cell 1 based on the first parameter. When the terminal device camps on a cell 3 by using the first subscriber identity, the terminal device determines, based on the original paging parameter and a paging configuration parameter of the cell 3, whether a PO collision occurs between a PO #C and the PO #B. If no collision occurs, the terminal device receives a paging message based on the PO #C. If the collision occurs, a new parameter may be obtained based on the solution provided in this embodiment of this application, and a new PO #C' of the terminal device in the cell 3 is determined based on the new parameter.

If the terminal device returns to the cell 1 by using the first subscriber identity, the terminal device determines, based on the first parameter, the PO #A' of the terminal device in the cell 1 and a PO #N of the terminal device in a cell k in which the terminal device is located by using a second subscriber identity, and determines whether a PO collision occurs. If no collision occurs, the terminal device receives a paging message based on the PO #A'. If the collision occurs, a new parameter may be obtained based on the solution provided in this embodiment of this application, and a new PO #A" of the terminal device in the cell 1 is determined based on the new parameter.

In another possible implementation, the terminal device may determine, based on the first parameter, a corresponding PO in each subsequent cell in which the terminal device is located by using the first subscriber identity, to determine whether a PO collision occurs.

In still another possible implementation, the terminal device may determine, based on the original parameter, a corresponding PO in each subsequent cell in which the terminal device is located by using the first subscriber identity. For example, when the terminal device returns to the cell 1 by using the first subscriber identity, the terminal device determines, based on the original parameter, the PO #A of the terminal device in the cell 1 and the PO #N of the terminal device in the cell k in which the terminal device is located by using the second subscriber identity, and determines whether the PO collision occurs. If no collision occurs, the terminal device sends, to a network device, indication information for resuming a paging parameter to the original parameter. Correspondingly, the access network device, or both the access network device and the core network device resumes/resume the paging parameter to the original parameter.

Sequence numbers of the foregoing processes do not mean an execution sequence in the foregoing method embodiments. The execution sequence of the processes should be determined based on functions and internal logic of the processes, and should not constitute any limitation on the implementation processes of embodiments of this application. In addition, it is possible that not all operations in the foregoing method embodiments need to be performed.

It should be understood that in the method embodiments of this application, the terminal device and/or the network device may perform some or all steps in the embodiments. These steps or operations are merely examples. In embodiments of this application, other operations or variations of various operations may be further performed.

It should be further understood that, in embodiments of this application, unless otherwise specified or in case of a logical collision, terms and/or descriptions in different embodiments may be consistent and may be mutually referenced. Technical features in different embodiments may be combined based on an internal logical relationship of the technical features to form a new embodiment.

It may be understood that, in embodiments of this application, an interaction mechanism between access network devices is applicable to interaction between a CU and a DU when an access network device includes the CU and the DU.

Optionally, the first access network device includes the CU and the DU. For a signaling exchange mechanism between the CU and the DU, refer to the signaling exchange mechanism between the first access network device and the second access network device. For example, it can be learned from the foregoing descriptions that the second access network device may send a paging message to the first access network device, so that the CU may send a paging message to the DU.

The core network device may also be referred to as a core network node. For example, the core network device may include an access management network element. The access management network element is mainly configured to perform mobility management, access management, and the like, and may be configured to implement a function of a mobility management entity (mobility management entity, MME) function or an access and mobility management function (access and mobility management function, AMF) network element. In a future communication system, the access management network element may still be the AMF, or may have another name. This is not limited in this application. For another example, the core network device may include a session management network element, and the session management network element is mainly configured to perform at least one of functions such as session management, user equipment internet protocol (internet protocol, IP) assignment and management, selecting and managing a user plane function, a termination point of a policy control and charging function interface, and a downlink data notification. The session management network element may be a session management function (session management function, SMF) or serving gateway (serving gateway, SGW) network element. In a future communication system, the session management network element may still be the SMF network element, or may have another name. This is not limited in this application. It should be understood that a specific form of the core network device is not limited in embodiments of this application, and may be a network element other than the AMF or the SMF.

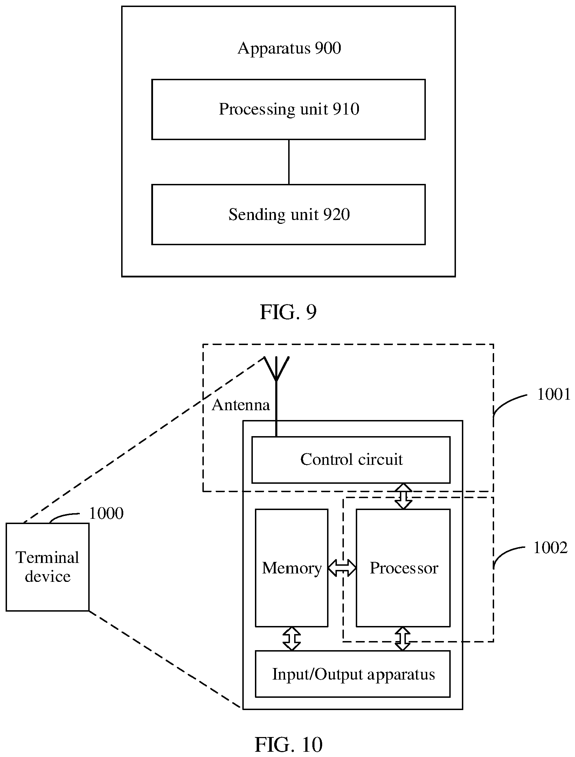

The foregoing describes in detail the paging method provided in embodiments of this application with reference to FIG. 4A to FIG. 8, and the following describes in detail paging apparatuses provided in embodiments of this application with reference to FIG. 9 to FIG. 15.

FIG. 9 is a schematic diagram of a paging apparatus 900 according to this application. As shown in FIG. 9, the apparatus 900 includes a processing unit 910 and a sending unit 920.

The processing unit 910 is configured to determine that a first paging occasion corresponding to a first subscriber identity collides with a second paging occasion corresponding to a second subscriber identity.

The sending unit 920 is configured to send, to a first access network device, first indication information indicating that the first paging occasion collides with the second paging occasion, where the first access network device is an access network device corresponding to a first cell in which the terminal device is located by using the first subscriber identity.

The apparatus 900 corresponds to the terminal device in the method embodiments. The apparatus 900 may be the terminal device in the method embodiments, or may be a chip or a functional module inside the terminal device in the method embodiments. The corresponding units of the apparatus 900 are configured to perform corresponding steps performed by the terminal device in the method embodiments shown in FIG. 4A and FIG. 4B, FIG. 7A and FIG. 7B, and FIG. 8.

The processing unit 910 in the apparatus 900 is configured to perform the processing-related steps corresponding to the terminal device in the method embodiments. For example, step S410 of determining that the PO collision occurs in FIG. 4A and FIG. 4B is performed, step S510 of determining that the PO collision occurs in FIG. 7A and FIG. 7B is performed, step S620 of generating the first parameter in FIG. 8 is performed, and step S610 of determining that the PO collision occurs in FIG. 8 is performed.

The sending unit 920 in the apparatus 900 performs the sending steps of the terminal device in the method embodiments. For example, step S420 of sending the first indication information to the first access network device in FIG. 4A and FIG. 4B is performed, step S520 of sending the first indication information to the first access network device in FIG. 7A and FIG. 7B is performed, and step S630 of sending the first parameter to the first access network device in FIG. 8 is performed.

The apparatus 900 may further include a receiving unit, configured to perform the receiving step of the terminal device, for example, receiving information sent by another device. The sending unit 920 and the receiving unit may form a transceiver unit, which has both a receiving function and a sending function. The processing unit 910 may be at least one processor. The sending unit 920 may be a transmitter or an interface circuit, and the receiving unit may be a receiver or an interface circuit. The receiver and the transmitter may be integrated together to form a transceiver or an interface circuit.

Optionally, the apparatus 900 may further include a storage unit, configured to store data and/or signaling. The processing unit 910, the sending unit 920, and the receiving unit may interact with or couple to the storage unit, for example, read or invoke the data and/or the signaling in the storage unit, so that the method in the foregoing embodiment is performed.

The foregoing units may exist independently, or may be completely or partially integrated.

FIG. 10 is a schematic diagram of a structure of a terminal device 1000 applicable to an embodiment of this application. The terminal device 1000 may be used in the system shown in FIG. 1. For ease of description, FIG. 10 shows only main components of the terminal device. As shown in FIG. 10, the terminal device 1000 includes a processor, a memory, a control circuit, an antenna, and an input/output apparatus. The processor is configured to control the antenna and the input/output apparatus to send and receive a signal. The memory is configured to store a computer program. The processor is configured to invoke the computer program from the memory and run the computer program, to perform a corresponding procedure and/or operation performed by the terminal device in the paging method provided in this application. Details are not described herein again.

A person skilled in the art may understand that, for ease of description, FIG. 10 shows only one memory and one processor. In an actual terminal device, there may be a plurality of processors and a plurality of memories. The memory may also be referred to as a storage medium, a storage device, or the like. This is not limited in embodiments of this application.

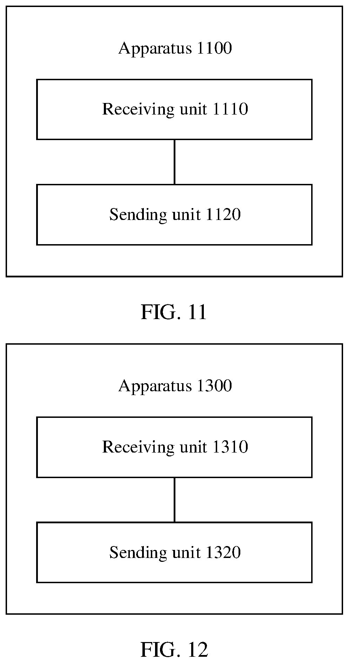

FIG. 11 is a schematic diagram of a paging apparatus 1100 according to this application. As shown in FIG. 11, the apparatus 1100 includes a receiving unit 1110 and a sending unit 1120.

The receiving unit 1110 is configured to receive first indication information that is from a terminal device and that indicates that a first paging occasion corresponding to a first subscriber identity collides with a second paging occasion corresponding to a second subscriber identity, where the paging apparatus 1100 is an access network device corresponding to a first cell in which the terminal device is located by using the first subscriber identity, and the terminal device supports the first subscriber identity and the second subscriber identity.

The sending unit 1120 is configured to send, to the terminal device, a first parameter used to determine a third paging occasion corresponding to the first subscriber identity.

The apparatus 1100 corresponds to the first access network device in the method embodiments. The apparatus 1100 may be the first access network device in the method embodiments, or may be a chip or a functional module inside the first access network device in the method embodiments. The corresponding units of the apparatus 1100 are configured to perform corresponding steps performed by the first access network device in the method embodiments shown in FIG. 4A and FIG. 4B, FIG. 7A and FIG. 7B, and FIG. 8.

The receiving unit 1110 in the apparatus 1100 performs the receiving steps of the first access network device in the method embodiments. For example, step S420 of receiving the first indication information sent by the terminal device in FIG. 4A and FIG. 4B is performed, step S4411 of receiving the first paging message sent by the second access network device in FIG. 4A and FIG. 4B is performed, step S442 of receiving the second response message sent by the second access network device in FIG. 4A and FIG. 4B is performed (where forms of the second response message are different in different manners), step S470 of receiving the second paging message sent by the core network device in FIG. 4A and FIG. 4B is performed, step S720 of receiving the first indication information sent by the terminal device in FIG. 7A and FIG. 7B is performed, step S551 of receiving the first paging message sent by the second access network device in FIG. 7A and FIG. 7B is performed, step S543 of receiving the second response message sent by the second access network device in FIG. 7A and FIG. 7B is performed (where forms of the second response message are different in different manners), step S561 of receiving the second paging message sent by the core network device in FIG. 7A and FIG. 7B is performed, step S630 of receiving the first parameter sent by the terminal device in FIG. 8 is performed, step S651 of receiving the first paging message sent by the second access network device in FIG. 8 is performed, step S650 of receiving the second response message sent by the second access network device in FIG. 8 is performed (where forms of the second response message are different in different manners), and step S672 of receiving the second paging message sent by the core network device in FIG. 8 is performed.

The sending unit 1120 in the apparatus 1100 performs the sending steps of the first access network device in the method embodiments. For example, step S430 of sending the second indication information to the second access network device in FIG. 4A and FIG. 4B is performed, step S444 of sending the first response message to the terminal device in FIG. 4A and FIG. 4B is performed, step S460 of sending the second notification message to the core network device in FIG. 4A and FIG. 4B is performed, step S540 of sending the second request message to the second access network device in FIG. 7A and FIG. 7B is performed, step S545 of sending the first response message to the terminal device in FIG. 7A and FIG. 7B is performed, step S561 of sending the second notification message to the core network device in FIG. 7A and FIG. 7B is performed, step S640 of sending the second request message to the second access network device in FIG. 8 is performed, step S680 of sending the first response message to the terminal device in FIG. 8 is performed, and step S671 of sending the second notification message to the core network device in FIG. 8 is performed.

The apparatus 1100 may further include a processing unit, configured to perform corresponding processing-related steps in the first access network device. For example, step S445 of storing the first parameter in FIG. 4A and FIG. 4B is performed, step S446 of generating the first response message in FIG. 4A and FIG. 4B is performed, step S530 of generating the first parameter in FIG. 7A and FIG. 7B is performed, step S531 of storing the first parameter in FIG. 7A and FIG. 7B is performed, step S546 of generating the first response message in FIG. 7A and FIG. 7B is performed, step S632 of storing the first parameter in FIG. 8 is performed, and step S670 of generating the first response message in FIG. 8 is performed.

The receiving unit 1110 and the sending unit 1120 may form a transceiver unit, which has both a receiving function and a sending function. The processing unit may be at least one processor. The sending unit 1120 may be a transmitter or an interface circuit. The receiving unit 1110 may be a receiver or an interface circuit. The receiver and the transmitter may be integrated together to form a transceiver or an interface circuit.

Optionally, the apparatus 1100 may further include a storage unit, configured to store data and/or signaling. The processing unit, the sending unit 1120, and the receiving unit 1110 may interact with or couple to the storage unit, for example, read or invoke the data and/or the signaling in the storage unit, so that the method in the foregoing embodiment is performed.

The foregoing units may exist independently, or may be completely or partially integrated.

FIG. 12 is a schematic diagram of a paging apparatus 1300 according to this application. As shown in FIG. 12, the apparatus 1300 includes a receiving unit 1310 and a sending unit 1320.

The receiving unit 1310 is configured to receive second indication information that is from a first access network device and that indicates that a first paging occasion corresponding to a first subscriber identity collides with a second paging occasion corresponding to a second subscriber identity, where the first access network device is an access network device corresponding to a first cell in which a terminal device is located by using the first subscriber identity, and the terminal device supports the first subscriber identity and the second subscriber identity.

The sending unit 1320 is configured to send, to the first access network device, a first parameter used to determine a third paging occasion corresponding to the first subscriber identity.

The apparatus 1300 corresponds to the second access network device in the method embodiments. The apparatus 1300 may be the second access network device in the method embodiments, or may be a chip or a functional module inside the second access network device in the method embodiments. The corresponding units of the apparatus 1300 are configured to perform corresponding steps performed by the second access network device in the method embodiments shown in FIG. 4A and FIG. 4B, FIG. 7A and FIG. 7B, and FIG. 8.

The receiving unit 1310 in the apparatus 1300 performs the receiving steps of the second access network device in the method embodiments. For example, step S430 of receiving the second indication information sent by the first access network device in FIG. 4A and FIG. 4B is performed, step S540 of receiving the second request message sent by the first access network device in FIG. 7A and FIG. 7B is performed, and step S640 of receiving the second request message sent by the first access network device in FIG. 8 is performed.

The sending unit 1320 in the apparatus 1300 performs the sending steps of the second access network device in the method embodiments. For example, step S411 of sending the first message to the terminal device in FIG. 4A and FIG. 4B is performed, step S4413 of sending the first paging message to the first access network device in FIG. 4A and FIG. 4B is performed, step S442 of sending the second response message to the first access network device in FIG. 4A and FIG. 4B is performed (where formats of the second response message are different in different manners), step S450 of sending the first notification message to the core network device in FIG. 4A and FIG. 4B is performed, step S511 of sending the first message to the terminal device in FIG. 7A and FIG. 7B is performed, step S551 of sending the first paging message to the first access network device in FIG. 7A and FIG. 7B is performed, step S543 of sending the second response message to the first access network device in FIG. 7A and FIG. 7B is performed (where forms of the second response message are different in different manners), step S550 of sending the first notification message to the core network device in FIG. 7A and FIG. 7B is performed, step S611 of sending the first message to the terminal device in FIG. 8 is performed, step S651 of sending the first paging message to the first access network device in FIG. 8 is performed, step S650 of sending the second response message to the first access network device in FIG. 8 is performed (where forms of the second response message are different in different manners), and step S660 of sending the first notification to the core network device in FIG. 8 is performed.

The apparatus 1300 may further include a processing unit, configured to perform the processing-related steps corresponding to the second access network device. For example, step S431 of verifying the terminal device in FIG. 4A and FIG. 4B is performed, step S440 of generating the first parameter in FIG. 4A and FIG. 4B is performed, step S441 of storing the first parameter in FIG. 4A and FIG. 4B is performed, step S443 of generating the first response message in FIG. 4A and FIG. 4B is performed, step S541 of verifying the terminal device in FIG. 7A and FIG. 7B is performed, step S542 of storing the first parameter in FIG. 7A and FIG. 7B is performed, and step S544 of generating the first response message in FIG. 7A and FIG. 7B is performed.

The receiving unit 1310 and the sending unit 1320 may form a transceiver unit, which has both a receiving function and a sending function. The processing unit may be at least one processor. The sending unit 1320 may be a transmitter or an interface circuit. The receiving unit 1310 may be a receiver or an interface circuit. The receiver and the transmitter may be integrated together to form a transceiver or an interface circuit.

Optionally, the apparatus 1300 may further include a storage unit, configured to store data and/or signaling. The processing unit, the sending unit 1320, and the receiving unit 1310 may interact with or couple to the storage unit, for example, read or invoke the data and/or the signaling in the storage unit, so that the method in the foregoing embodiment is performed.

The foregoing units may exist independently, or may be completely or partially integrated.

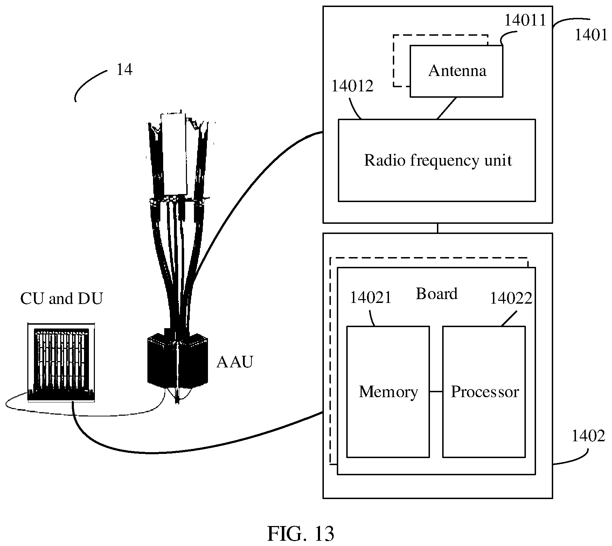

FIG. 13 is a schematic diagram of a structure of an access network device 1400 according to an embodiment of this application. The access network device may be configured to implement a function of the first access network device or the second access network device in the foregoing paging method. FIG. 13 may be a schematic diagram of a structure of the first access network device or the second access network device.

In a possible manner, for example, in some implementation solutions in a 5G communication system, the access network device 1400 may include a CU, a DU, and an AAU. Compared with an access network device in an LTE communication system, the access network device includes one or more radio units, for example, a remote radio unit (remote radio unit, RRU) 1401 and one or more baseband units (baseband unit, BBU):
A non-real-time part of the original BBU is split and redefined as a CU, which is responsible for processing a non-real-time protocol and service. Some physical layer processing functions of the BBU are combined with the original RRU and a passive antenna into an AAU, and remaining functions of the BBU are redefined as a DU, which is responsible for processing a physical layer protocol and a real-time service. In short, a CU and a DU are distinguished between each other based on real-time performance of processed content, and an AAU is a combination of an RRU and an antenna.

The CU, the DU, and the AAU may be deployed separately or together. Therefore, there may be a plurality of network deployment forms. A possible deployment form is consistent with that of a conventional 4G access network device. The CU and the DU are deployed on same hardware. It should be understood that, FIG. 13 is merely an example, and constitutes no limitation on the protection scope of this application. For example, a deployment form may alternatively be that DUs are deployed in a 5G BBU equipment room, CUs or DUs are deployed together, or CUs are centralized at a higher level.

The AAU 1401 may implement a receiving function and a sending function, referred to as a transceiver unit 1401, and corresponds to the receiving unit 1110 in FIG. 11 or the receiving unit 1310 in FIG. 13. Optionally, the transceiver unit 1401 may also be referred to as a transceiver, a transceiver circuit, a transceiver, or the like, and may include at least one antenna 14011 and a radio frequency unit 14014. Optionally, the transceiver unit 1401 may include a receiving unit and a sending unit. The receiving unit may correspond to a receiver (or referred to as a receiver machine or a receiver circuit), and the sending unit may correspond to a transmitter (or referred to as a transmitter machine or a transmitter circuit). The CU and the DU 1402 may implement an internal processing function, and are referred to as a processing unit 1402. Optionally, the processing unit 1402 may control the access network device or the like, and may be referred to as a controller. The AAU 1401, the CU, and the DU 1402 may be physically disposed together, or may be physically disposed separately.

In addition, the access network device is not limited to the form shown in FIG. 13, and may also be in another form. For example, the access network device includes a BBU and an ARU, or includes a BBU and an AAU; or may be a CPE; or may be in another form. This is not limited in this application.

It should be understood that the access network device 1400 shown in FIG. 13 can implement functions of the first access network device or the second access network device in the method embodiments in FIG. 4A and FIG. 4B, FIG. 7A and FIG. 7B, and FIG. 8. Operations and/or functions of the units in the access network device 1400 are used to implement a corresponding procedure performed by the first access network device or the second access network device in the method embodiments of this application. To avoid repetition, detailed descriptions are appropriately omitted herein. The structure of the access network device shown in FIG. 13 is merely a possible form, and should not constitute any limitation on embodiments of this application. According to this application, there may be a second access network device structure in another form in the future.

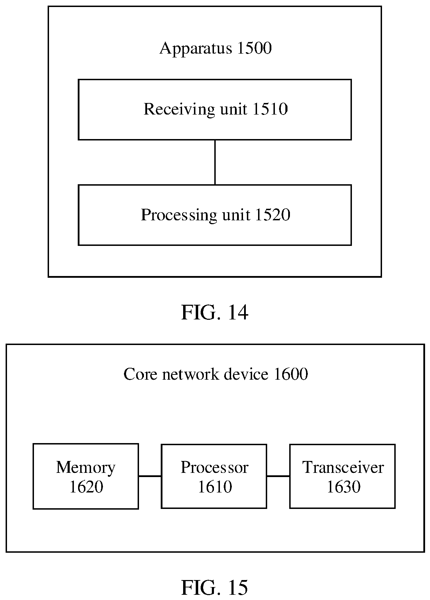

FIG. 14 is a schematic diagram of a paging apparatus 1500 according to this application. As shown in FIG. 14, the apparatus 1500 includes a receiving unit 1510 and a sending unit 1520.

The receiving unit 1510 is configured to receive a notification message from an access network device, where the notification message includes a first parameter, the first parameter is used to determine a third paging occasion corresponding to a first subscriber identity of a terminal device, the terminal device supports the first subscriber identity and a second subscriber identity, and a first paging occasion corresponding to the first subscriber identity collides with a second paging occasion corresponding to the second subscriber identity.

The sending unit 1520 sends a second paging message to an access network device to which a cell belongs, where the second paging message includes the first parameter and information about the cell.

The apparatus 1500 corresponds to the core network device in the method embodiments. The apparatus 1500 may be the core network device in the method embodiments, or may be a chip or a functional module inside the core network device in the method embodiments. The corresponding units of the apparatus 1500 are configured to perform corresponding steps performed by the core network device in the method embodiments shown in FIG. 4A and FIG. 4B, FIG. 7A and FIG. 7B, and FIG. 8.

The receiving unit 1510 in the apparatus 1500 performs the receiving steps of the core network device in the method embodiments. For example, step S450 of receiving the first notification message sent by the second access network device in FIG. 4A and FIG. 4B is performed, step S460 of receiving the second notification message sent by the first access network device in FIG. 4A and FIG. 4B is performed, step S550 of receiving the first notification message sent by the second access network device in FIG. 7A and FIG. 7B is performed, step S560 of receiving the second notification message sent by the first access network device in FIG. 7A and FIG. 7B is performed, step S660 of receiving the first notification message sent by the second access network device in FIG. 8 is performed, and step S671 of receiving the second notification message sent by the first access network device in FIG. 8 is performed.

The sending unit 1520 in the apparatus 1500 performs the sending steps of the core network device in the method embodiments. For example, step S470 of sending the second paging message to the first access network device in FIG. 4A and FIG. 4B is performed, step S561 of sending the second paging message to the first access network device in FIG. 7A and FIG. 7B is performed, and step S672 of sending the second paging message to the first access network device in FIG. 8 is performed.

The apparatus 1500 may further include a processing unit, configured to perform steps implemented or processed in the core network device. The receiving unit 1510 and the sending unit 1520 may form a transceiver unit, which has both a receiving function and a sending function. The processing unit may be a processor. The sending unit 1520 may be a transmitter. The receiving unit 1510 may be a receiver. The receiver and the transmitter may be integrated together to form a transceiver.

As shown in FIG. 15, an embodiment of this application further provides a core network device 1600. The core network device 1600 includes a processor 1610, a memory 1620, and a transceiver 1630. The memory 1620 stores instructions or a program. The processor 1610 is configured to execute the instructions or the program stored in the memory 1620. When the instructions or the program stored in the memory 1620 are or is executed, the transceiver 1630 is configured to perform an operation performed by the sending unit 1520 in the apparatus 1500 shown in FIG. 14.

An embodiment of this application further provides a communication system, including the foregoing terminal device, first access network device, second access network device, and core network device.

This application further provides a computer-readable storage medium. The computer-readable storage medium stores instructions. When the instructions are run on a computer, the computer is enabled to perform the steps performed by the terminal device in the methods shown in FIG. 4A and FIG. 4B, FIG. 7A and FIG. 7B, and FIG. 8.

This application further provides a computer-readable storage medium. The computer-readable storage medium stores instructions. When the instructions are run on a computer, the computer is enabled to perform the steps performed by the first access network device in the methods shown in FIG. 4A and FIG. 4B, FIG. 7A and FIG. 7B, and FIG. 8.

This application further provides a computer-readable storage medium. The computer-readable storage medium stores instructions. When the instructions are run on a computer, the computer is enabled to perform the steps performed by the second access network device in the methods shown in FIG. 4A and FIG. 4B, FIG. 7A and FIG. 7B, and FIG. 8.

This application further provides a computer-readable storage medium. The computer-readable storage medium stores instructions. When the instructions are run on a computer, the computer is enabled to perform the steps performed by the core network device in the methods shown in FIG. 4A and FIG. 4B, FIG. 7A and FIG. 7B, and FIG. 8.

This application further provides a computer program product including instructions. When the computer program product runs on a computer, the computer is enabled to perform the steps performed by the terminal device in the methods shown in FIG. 4A and FIG. 4B, FIG. 7A and FIG. 7B, and FIG. 8.

This application further provides a computer program product including instructions. When the computer program product runs on a computer, the computer is enabled to perform the steps performed by the first access network device in the methods shown in FIG. 4A and FIG. 4B, FIG. 7A and FIG. 7B, and FIG. 8.

This application further provides a computer program product including instructions. When the computer program product runs on a computer, the computer is enabled to perform the steps performed by the second access network device in the methods shown in FIG. 4A and FIG. 4B, FIG. 7A and FIG. 7B, and FIG. 8.

This application further provides a computer program product including instructions. When the computer program product runs on a computer, the computer is enabled to perform the steps performed by the core network device in the methods shown in FIG. 4A and FIG. 4B, FIG. 7A and FIG. 7B, and FIG. 8.

This application further provides a chip, including a processor. The processor is configured to read and run a computer program stored in a memory, to perform a corresponding operation and/or procedure performed by the terminal device in the paging method provided in this application. Optionally, the chip further includes the memory, the memory is connected to the processor through a circuit or a wire, and the processor is configured to read and execute the computer program in the memory. Further, optionally, the chip further includes a communication interface, and the processor is connected to the communication interface. The communication interface is configured to receive to-be-processed data and/or information. The processor obtains the data and/or information from the communication interface, and processes the data and/or information. The communication interface may be an input/output interface, an interface circuit, an output circuit, an input circuit, a pin, a related circuit, or the like in the chip. The processor may alternatively be embodied as a processing circuit or a logic circuit.

This application further provides a chip, including a processor. The processor is configured to read and run a computer program stored in a memory, to perform a corresponding operation and/or procedure performed by the first access network device in the paging method provided in this application. Optionally, the chip further includes the memory, the memory is connected to the processor through a circuit or a wire, and the processor is configured to read and execute the computer program in the memory. Further, optionally, the chip further includes a communication interface, and the processor is connected to the communication interface. The communication interface is configured to receive to-be-processed data and/or information. The processor obtains the data and/or information from the communication interface, and processes the data and/or information. The communication interface may be an input/output interface, an interface circuit, an output circuit, an input circuit, a pin, a related circuit, or the like in the chip. The processor may alternatively be embodied as a processing circuit or a logic circuit.

This application further provides a chip, including a processor. The processor is configured to read and run a computer program stored in a memory, to perform a corresponding operation and/or procedure performed by the second access network device in the paging method provided in this application. Optionally, the chip further includes the memory, the memory is connected to the processor through a circuit or a wire, and the processor is configured to read and execute the computer program in the memory. Further, optionally, the chip further includes a communication interface, and the processor is connected to the communication interface. The communication interface is configured to receive to-be-processed data and/or information. The processor obtains the data and/or information from the communication interface, and processes the data and/or information. The communication interface may be an input/output interface, an interface circuit, an output circuit, an input circuit, a pin, a related circuit, or the like in the chip. The processor may alternatively be embodied as a processing circuit or a logic circuit.

This application further provides a chip, including a processor. The processor is configured to read and run a computer program stored in a memory, to perform a corresponding operation and/or procedure performed by the core network device in the paging method provided in this application. Optionally, the chip further includes the memory, the memory is connected to the processor through a circuit or a wire, and the processor is configured to read and execute the computer program in the memory. Further, optionally, the chip further includes a communication interface, and the processor is connected to the communication interface. The communication interface is configured to receive to-be-processed data and/or information. The processor obtains the data and/or information from the communication interface, and processes the data and/or information. The communication interface may be an input/output interface, an interface circuit, an output circuit, an input circuit, a pin, a related circuit, or the like in the chip. The processor may alternatively be embodied as a processing circuit or a logic circuit.

The foregoing chip may be replaced with a chip system, and details are not described herein.

This application further provides a communication system. The communication system may include a terminal device and an access network device. The access network device may include a first access network device and/or a second access network device. In addition, the communication system may further include a core network device.

This application further provides a communication system. The communication system may include a first access network device and a second access network device. In addition, the communication system may further include a core network device.

In this application, the terms "include", "have" and any other variants mean to cover non-exclusive inclusion, for example, a process, method, system, product, or device that includes a series of steps or units is not necessarily limited to those steps or units that are clearly listed, but may include other steps or units not expressly listed or inherent to such a process, method, product, or device.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementations. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of the embodiments.

In addition, the functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions in this application essentially, or a part contributing to an existing technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In addition, the term "and/or" in this application describes only an association relationship for describing associated objects and represents that three relationships may exist. For example, A and/or B may indicate the following three cases: Only A exists, both A and B exist, and only B exists. In addition, the character "/" in this specification generally indicates an "or" relationship between the associated objects. The term "at least one" in this application may represent "one" and "two or more". For example, at least one of A, B, and C may indicate the following seven cases: Only A exists, only B exists, only C exists, both A and B exist, both A and C exist, both C and B exist, and A, B, and C exist.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A paging method, applied to a terminal device supporting a first subscriber identity and a second subscriber identity, wherein the method comprises:
determining that a first paging occasion corresponding to the first subscriber identity collides with a second paging occasion corresponding to the second subscriber identity; and
sending, to a first access network device, first indication information indicating that the first paging occasion collides with the second paging occasion, wherein the first access network device is an access network device corresponding to a first cell in which the terminal device is located by using the first subscriber identity.

2. The method according to claim 1, wherein the first subscriber identity is in an inactive state.

3. The method according to claim 1 or 2, wherein that the first paging occasion collides with the second paging occasion comprises:
the first paging occasion and the second paging occasion completely or partially overlap.

4. The method according to any one of claims 1 to 3, wherein the method further comprises:
receiving, from the first access network device, a first parameter used to determine a third paging occasion corresponding to the first subscriber identity, wherein the third paging occasion does not collide with the second paging occasion.

5. The method according to claim 4, wherein the first parameter comprises at least one of the following parameters: a paging frame offset, a paging occasion offset, a subscriber identifier, or a discontinuous reception configuration.

6. A paging method, comprising:
receiving, by a second access network device, second indication information that is from a first access network device and that indicates that a first paging occasion corresponding to a first subscriber identity collides with a second paging occasion corresponding to a second subscriber identity, wherein the first access network device is an access network device corresponding to a first cell in which a terminal device is located by using the first subscriber identity, and the terminal device supports the first subscriber identity and the second subscriber identity; and
sending, by the second access network device to the first access network device, a first parameter used to determine a third paging occasion corresponding to the first subscriber identity.

7. The method according to claim 6, wherein the second indication information comprises at least one of the following information:
first indication information, paging configuration information of the first cell, or a second parameter.

8. The method according to claim 6 or 7, wherein that the first paging occasion collides with the second paging occasion comprises:
the first paging occasion and the second paging occasion completely or partially overlap.

9. The method according to any one of claims 6 to 8, wherein the first parameter comprises at least one of the following parameters:
a paging frame offset, a paging occasion offset, a subscriber identifier, or a discontinuous reception configuration.

10. The method according to any one of claims 6 to 9, wherein the method further comprises:
generating, by the second access network device, a first response message, wherein the first response message comprises the first parameter; and
the sending, by the second access network device, a first parameter to the first access network device comprises:
sending, by the second access network device, the first parameter and the first response message to the first access network device; or sending, by the second access network device, the first response message to the first access network device.

11. The method according to any one of claims 6 to 10, wherein the method further comprises:
storing, by the second access network device, the first parameter.

12. The method according to any one of claims 6 to 11, wherein the method further comprises:
sending, by the second access network device, a first notification message to a core network device, wherein the first notification message comprises the first parameter and information about a cell to which the first parameter is applicable.

13. The method according to any one of claims 6 to 12, wherein the method further comprises:
sending, by the second access network device, a first paging message to the first access network device, wherein the first paging message comprises the first parameter and the information about the cell to which the first parameter is applicable.

14. A paging method, comprising:
receiving, by a first access network device, first indication information that is from a terminal device and that indicates that a first paging occasion corresponding to a first subscriber identity collides with a second paging occasion corresponding to a second subscriber identity, wherein the terminal device supports the first subscriber identity and the second subscriber identity, and the first access network device is an access network device corresponding to a first cell in which the terminal device is located by using the first subscriber identity; and
sending, by the first access network device to the terminal device, a first parameter used to determine a third paging occasion corresponding to the first subscriber identity.

15. The method according to claim 14, wherein that the first paging occasion collides with the second paging occasion comprises:
the first paging occasion and the second paging occasion completely or partially overlap.

16. The method according to claim 14 or 15, wherein before the sending a first parameter to the terminal device, the method further comprises:
sending, by the first access network device to a second access network device, second indication information indicating that the first paging occasion collides with the second paging occasion; and
receiving, by the first access network device, the first parameter from the second access network device.

17. The method according to claim 16, wherein the receiving, by the first access network device, the first parameter from the second access network device comprises:
receiving, by the first access network device, the first parameter and a first response message from the second access network device, wherein the first response message comprises the first parameter; or
receiving, by the first access network device, the first response message from the second access network device.

18. The method according to claim 16 or 17, wherein the second indication information comprises at least one of the following information:
the first indication information, paging configuration information of the first cell, or a second parameter.

19. The method according to any one of claims 14 to 18, wherein the first parameter comprises at least one of the following parameters:
a paging frame offset, a paging occasion offset, a subscriber identifier, or a discontinuous reception configuration.

20. The method according to any one of claims 14 to 19, wherein the method further comprises:
storing, by the first access network device, the first parameter.

21. The method according to any one of claims 14 to 20, wherein the method further comprises:
sending, by the first access network device, a second notification message to a core network device, wherein the second notification message comprises the first parameter and information about a cell to which the first parameter is applicable.

22. The method according to any one of claims 14 to 21, wherein the method further comprises:
receiving, by the first access network device, a first paging message from the second access network device, wherein the first paging message comprises the first parameter and the information about the cell to which the first parameter is applicable; or
receiving, by the first access network device, a second paging message from the core network device, wherein the second paging message comprises the first parameter and the information about the cell to which the first parameter is applicable.

23. A paging method, comprising:
receiving, by a core network device, a notification message from an access network device, wherein the notification message comprises a first parameter and information about a cell to which the first parameter is applicable, the first parameter is used to determine a third paging occasion corresponding to a first subscriber identity of a terminal device, the terminal device supports the first subscriber identity and a second subscriber identity, and a first paging occasion corresponding to the first subscriber identity collides with a second paging occasion corresponding to the second subscriber identity; and
sending, by the core network device, a second paging message to an access network device to which the cell belongs, wherein the second paging message comprises the first parameter and the information about the cell.

24. A paging apparatus, wherein the apparatus is configured to implement the method according to any one of claims 1 to 5.

25. A paging apparatus, wherein the apparatus is configured to implement the method according to any one of claims 6 to 13.

26. A paging apparatus, wherein the apparatus is configured to implement the method according to any one of claims 14 to 22.

27. A paging apparatus, wherein the apparatus is configured to implement the method according to claim 23.

28. A communication device, comprising:
a memory, wherein the memory is configured to store a computer program;
a transceiver, wherein the transceiver is configured to perform sending and receiving steps; and
a processor, wherein the processor is configured to invoke the computer program from the memory and run the computer program, to enable the communication device to perform the method according to any one of claims 1 to 23.

29. A computer-readable storage medium, wherein the computer-readable medium stores a computer program; and when the computer program runs on a computer, the computer is enabled to perform the method according to any one of claims 1 to 23.

30. A communication system, comprising:
the paging apparatus according to claim 24, the paging apparatus according to claim 25, the paging apparatus according to claim 26, and the paging apparatus according to claim 27.
